# EUROPEAN PATENT APPLICATION

(11) **EP 4 325 762 A1**
(43) Date of publication of application: **21.02.2024**
(21) Application number: 22787591.1
(22) Date of filing: 14.04.2022
(51) Int. Cl.: H04L 5/00, H04W 72/04

(54) **SIDELINK FEEDBACK RESOURCE DETERMINATION METHOD, TERMINAL, AND NETWORK-SIDE DEVICE**

(30) Priority: 15.04.2021 CN 202110408203
(71) Applicant: Vivo Mobile Communication Co., Ltd., Dongguan, Guangdong 523863 (CN)
(72) Inventor: PENG, Shuyan, Dongguan, Guangdong 523863 (CN); JI, Zichao, Dongguan, Guangdong 523863 (CN); WANG, Huan, Dongguan, Guangdong 523863 (CN)
(74) Representative: Murgitroyd & Company
(86) International application number: PCT/CN2022/086763
(87) International publication number: WO 2022/218369

(57) **Abstract**

This application discloses a method for determining a sidelink feedback resource, a UE, and a network-side device, and pertains to the field of communication technologies. The method for determining a sidelink feedback resource in embodiments of this application includes: determining, by a first UE, a first resource, where the first resource is one or more resources used by the first UE to perform a channel access procedure.

## Description

### CROSS-REFERENCE TO RELATED APPLICATIONS

This application claims priority to Chinese Patent Application No. 2021104082034, filed on April 15, 2021 and entitled "METHOD FOR DETERMINING SIDELINK FEEDBACK RESOURCE, TERMINAL, AND NETWORK-SIDE DEVICE", which is incorporated herein by reference in its entirety.

### TECHNICAL FIELD

This application pertains to the field of communications technologies, and specifically relates to a method for determining a sidelink feedback resource, a UE, and a network-side device.

### BACKGROUND

On a sidelink (Sidelink, SL), a transmission node can perform channel access through load based equipment (Load based equipment, LBE) in an unlicensed band for information transmission.

To carry acknowledgement (Acknowledgement, ACK)/negative acknowledgement (Negative Acknowledgement, NACK) feedback information on SL, new radio (New Radio, NR) vehicle to everything (Vehicle to Everything, V2X) supports a new type of SL channel, that is, physical sidelink feedback channel (Physical Sidelink Feedback Channel, PSFCH). The introduction of the PSFCH can improve the reliability of the system and increase the resource utilization in the system. A period of the PSFCH channel in time domain is N (N = 1, 2 or 4), where N can be understood as that every N (logical) slots (slot) include a PSFCH. N = 0 indicates that no PSFCH is configured in a resource pool. The time-frequency resources of a PSFCH and a physical sidelink control channel (Physical Sidelink Control Channel, PSCCH) or a physical sidelink shared channel (Physical Sidelink Shared Channel, PSSCH) satisfy a predefined mapping relationship, which limits transmission flexibility. In an unlicensed band, a resource location of a PSFCH determined based on a PSSCH and/or PSCCH and a predefined rule may be unusable for PSFCH transmission due to resource contention from other systems.

### SUMMARY

Embodiments of this application provide a method for determining a sidelink feedback resource, a UE, and a network-side device, which can solve the problem that an SL feedback resource in an unlicensed band has limited flexibility and cannot be used for transmission of feedback information.

According to a first aspect, a method for determining a sidelink feedback resource is provided, where the method includes:
determining, by a first UE, a first resource, where the first resource is one or more resources used by the first UE to perform a channel access procedure.

According to a second aspect, a method for determining a sidelink feedback resource is provided, where the method includes:
performing, by a second UE or scheduling UE, feedback information monitoring on a first resource, where the first resource is one or more resources used by a first UE to perform a channel access procedure.

According to a third aspect, a method for determining a sidelink feedback resource is provided, where the method includes:
performing, by a network-side device, feedback information monitoring on a first resource, where the first resource is one or more resources used by a first UE to perform a channel access procedure.

According to a fourth aspect, an apparatus for determining a sidelink feedback resource is provided, including:
a first determining unit, configured to determine a first resource, where the first resource is one or more resources used by a first UE to perform a channel access procedure.

According to a fifth aspect, an apparatus for determining a sidelink feedback resource is provided, including:
a third processing unit, configured to perform feedback information monitoring on a first resource, where the first resource is one or more resources used by a first UE to perform a channel access procedure.

According to a sixth aspect, an apparatus for determining a sidelink feedback resource is provided, including:
a sixth processing unit, configured to perform feedback information monitoring on a first resource, where the first resource is one or more resources used by a first UE to perform a channel access procedure.

According to a seventh aspect, a UE is provided, where the UE includes a processor, a memory, and a program or instructions stored in the memory and executable on the processor, and when the program or the instructions are executed by the processor, the steps of the method according to the first aspect or the second aspect are implemented.

According to an eighth aspect, a UE is provided, including a processor and a communication interface, where the processor is configured to determine a first resource and the first resource is one or more resources used by the first UE to perform a channel access procedure.

According to a ninth aspect, a network-side device is provided, where the network-side device includes a processor, a memory, and a program or instructions stored in the memory and executable on the processor, and when the program or instructions are executed by the processor, the steps of the method according to the third aspect are implemented.

According to a tenth aspect, a network-side device is provided, including a processor and a communication interface, where the processor is configured to perform feedback information monitoring on a first resource, the first resource being one or more resources used by a first UE to perform a channel access procedure.

According to an eleventh aspect, a readable storage medium is provided, where the readable storage medium stores a program or instructions, and when the program or instructions are executed by a processor, the steps of the method for determining a sidelink feedback resource according to the first aspect are implemented, or the steps of the method for determining a sidelink feedback resource according to the second aspect are implemented, or the steps of the method for determining a sidelink feedback resource according to the third aspect are implemented.

According to a twelfth aspect, a chip is provided, where the chip includes a processor and a communication interface, the communication interface is coupled to the processor, and the processor is configured to run a program or instructions to implement the method for determining a sidelink feedback resource according to the first aspect, or to implement the method for determining a sidelink feedback resource according to the second aspect, or to implement the method for determining a sidelink feedback resource according to the third aspect.

According to a thirteenth aspect, a computer program/program product is provided, where the computer program/program product is stored in a storage medium, and the program/program product is executed by at least one processor to implement the steps of the method for determining a sidelink feedback resource according to the first aspect, the steps of the method for determining a sidelink feedback resource according to the second aspect, or the steps of the method for determining a sidelink feedback resource according to the third aspect.

In the embodiments of this application, the first UE determines a first resource for performing the channel access procedure. The monitoring location is flexible and controllable, and the scheduling flexibility is high. Moreover, the first UE only needs to perform channel access on the first resource, which can reduce the energy consumption for the monitoring of the first UE.

### BRIEF DESCRIPTION OF DRAWINGS

FIG. 1 is a schematic diagram of a wireless communications system to which an embodiment of this application is applicable;
FIG. 2 is a first schematic flowchart of a method for determining a sidelink feedback resource according to an embodiment of this application;
FIG. 3 is a first schematic diagram of semi-statically configuring one/more PSFCH candidate resources according to an embodiment of this application;
FIG. 4 is a second schematic diagram of semi-statically configuring one/more PSFCH candidate resources according to an embodiment of this application;
FIG. 5 is a schematic diagram of a first UE sharing a COT of a second UE to transmit a PSFCH according to an embodiment of this application;
FIG. 6 is a schematic diagram of a PSFCH of a first UE being sent in a same time-domain unit as a PSSCH and/or PSCCH of the first UE according to an embodiment of this application;
FIG. 7 is a schematic diagram of all time domain resources being PSFCH candidate resources according to an embodiment of this application;
FIG. 8 is a schematic diagram of dynamically indicating one/more PSFCH candidate resources according to an embodiment of this application;
FIG. 9 is a schematic diagram of a PSFCH resource being associated with a PSCCH/PSSCH according to an embodiment of this application;
FIG. 10 is a second schematic flowchart of a method for determining a sidelink feedback resource according to an embodiment of this application;
FIG. 11 is a third schematic flowchart of a method for determining a sidelink feedback resource according to an embodiment of this application;
FIG. 12 is a first schematic structural diagram of an apparatus for determining a sidelink feedback resource according to an embodiment of this application;
FIG. 13 is a second schematic structural diagram of an apparatus for determining a sidelink feedback resource according to an embodiment of this application;
FIG. 14 is a third schematic structural diagram of an apparatus for determining a sidelink feedback resource according to an embodiment of this application;
FIG. 15 is a schematic structural diagram of a communication device according to an embodiment of this application;
FIG. 16 is a schematic diagram of a hardware structure of a UE implementing an embodiment of this application; and
FIG. 17 is a schematic structural diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

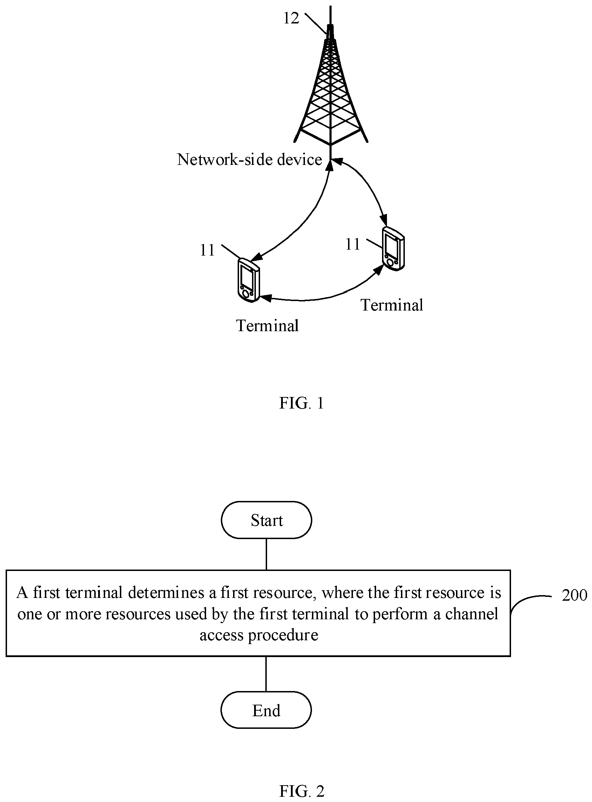

FIG. 1 is a schematic diagram of a wireless communications system to which an embodiment of this application is applicable. The wireless communications system includes a UE 11 and a network-side device 12. The UE 11 may also be referred to as a UE device or user equipment (User Equipment, UE), and the UE 11 may be a UE-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes: a smartwatch, a wrist band, earphones, glasses, or the like. It should be noted that the specific type of the UE 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. Provided that the same technical effect is achieved, the base station is not limited to a specific technical term. It should be noted that the base station in the NR system is only used as an example in the embodiments of this application, but a specific type of the base station is not limited.

In a future communications system, a shared spectrum such as an unlicensed band (unlicensed band) may be used to supplement a licensed band (licensed band), to help an operator expand services. In order to be consistent with an NR (New Radio, new radio) deployment and maximize NR-based access in an unlicensed frequency band, the unlicensed bands may be configured in frequency bands of 5 GHz, 37 GHz, and 60 GHz. Since unlicensed bands are shared by a plurality of radio access technologies (Radio Access Technology, RAT), such as Wi-Fi, radar, and long term evolution assisted access (Long Term Evolution Assisted Access, LTE-LAA), in some countries or regions, usage of the unlicensed bands must comply with regulations, for example rules such as listen before talk (listen before talk, LBT) and maximum channel occupancy time (maximum channel occupancy time, MCOT), to ensure that all devices can use the resource fairly. When needing to transmit information, a transmission node needs to perform LBT first to perform energy detection (energy detection, ED) on surrounding nodes. When a detected power is lower than a threshold, a channel is considered to be idle (idle) and the transmission node can perform transmission. Otherwise, the channel is considered to be busy and the transmission node cannot perform transmission. The transmission node may be a base station, UE, a Wi-Fi AP, and the like. After the transmission node starts to perform transmission, a channel occupancy time (channel occupancy time, COT) cannot be greater than the MCOT.

Commonly used categories (category) of LBT may include category 1, category 2, and category 4. In category 1 LBT, a transmit node does not perform LBT, which means no LBT or immediate transmission (immediate transmission). Category 2 LBT is one-shot LBT, that is, a node performs LBT once before transmission, and transmission is performed when the channel is idle, or transmission is not performed when the channel is busy. Category 4 LBT is a channel listening mechanism based on back-off (back-off). When detecting that a channel is busy, the transmission node performs back-off and continues to listen until it detects that a channel is idle. For a gNB, category 2 LBT is applied in a case that there is no discovery reference signal (Discovery Reference Signal, DRS) without physical downlink shared channel (Physical downlink shared channel, PDSCH); and category 4 LBT is applied to a PDSCH/a physical downlink control channel (Physical downlink control channel PDCCH)/an extended physical downlink control channel (Extended PDCCH, ePDCCH). For UE, category4 LBT corresponds to type1 UL channel access procedure and category2 LBT corresponds to type2 UL channel access procedure.

Frame based equipment (Frame Based Equipment, FBE) means that the equipment uses a periodic timing structure for transmission/reception, with its periodicity being a fixed frame period (Fixed Frame Period, FFP).

An FBE node occupies a channel using an LBT-based channel access mechanism. The node that initiates a transmission sequence containing one or more continuous transmissions is called an initiating device (Initiating Device) and other nodes are called responding devices (Responding Device). An FBE node may be an initiating node or a responding node, or may support the two node functions simultaneously.

For load based equipment (Load based equipment, LBE), a transmission node can start LBT from any moment and can perform transmission only until an idle channel is detected. For a transmission node, there is no fixed listening time, and the transmission node is not required to skip listening when the channel is detected as busy. The transmission node can continue listening by initiating backoff and performing several extended clear channel assessments (Extended Clear Channel Assessment, eCCA), until the counter of eCCA becomes zero.

On SL, the channel access can be performed through LBE in an unlicensed band for information transmission. To carry ACK/NACK feedback information on an SL, NR V2X supports a new type of SL channel, that is, PSFCH. A PSFCH has a fixed association with a PSCCH/PSSCH and has limited transmission flexibility.

The following describes in detail the method for determining a sidelink feedback resource provided in the embodiments of this application by using some embodiments and application scenarios thereof with reference to the accompanying drawings.

FIG. 2 is a first schematic flowchart of a method for determining a sidelink feedback resource according to an embodiment of this application, including:

Step 200: A first UE determines a first resource, where the first resource is one or more resources used by the first UE to perform a channel access procedure.

The first UE is the receiving UE of PSSCH and/or PSCCH, and the transmitting UE of feedback information.

The first UE determines the first resource, where the first resource is the resource used by the first UE to perform the channel access procedure, meaning that the first UE performs the channel access procedure on the first resource.

Optionally, the first resource is one or more resources.

Optionally, the channel access procedure includes:
1) set a counter value N;
2) if N>0, the UE performs N-1;
3) monitor whether the resource/channel is idle, and if the channel is idle, perform step 4); otherwise, perform step 5);
4) if N = 0, stop; otherwise, perform step 2);
5) perform monitoring for an additional time Td and determine whether the channel is idle;
6) if the additional time Td is idle, perform step 4); otherwise, perform step 5).

Optionally, the first resource is determined by at least one of protocol predefinition, network pre-configuration, UE pre-configuration, network configuration, UE configuration, media access control control element (Media Access Control Control Element, MAC CE), downlink control information (Downlink Control Information, DCI) indication, and sidelink control information (Sidelink Control Information, SCI) indication.

For example, the first UE determines a candidate feedback resource location based on a location of the PSSCH and/or PSCCH, and performs a channel access procedure at the candidate feedback resource location. If the access is successful, the first UE transmits feedback information; otherwise, the first UE performs the access at the location of a next candidate feedback resource.

In this embodiment of this application, the first UE determines a first resource for performing the channel access procedure. The monitoring location is flexible and controllable, and the scheduling flexibility is high. Moreover, the first UE only needs to perform channel access on the first resource, which can reduce the energy consumption for the monitoring of the first UE.

Optionally, the first resource includes at least one of the following.
a candidate feedback resource;
a feedback resource;
a listen before talk LBT location;
a monitoring resource;
a physical sidelink feedback channel PSFCH resource;
a resource for a channel state information (Channel State Information, CSI) report;
a resource for a hybrid automatic repeat request (Hybrid Automatic Repeat reQuest, HARQ).

An embodiment of this application gives a method for determining an SL feedback resource in an unlicensed band.

Optionally, the candidate feedback resource or feedback resource is: a PSFCH resource, a resource for a CSI report, or a resource for a HARQ.

Optionally, the monitoring resource is a resource for channel monitoring performed by the first UE.

Optionally, the determining, by a first UE, a first resource includes at least one of the following:
determining, by the first UE based on a first physical sidelink shared channel PSSCH and/or physical sidelink control channel PSCCH and a first mapping rule, the first resource, where the first mapping rule is used to indicate a mapping relationship between the first PSSCH and/or PSCCH and the first resource;
determining, by the first UE based on data transmission of a network-side device and a second mapping rule, the first resource, where the second mapping rule is used to indicate a mapping relationship between data transmission of the network-side device and the first resource;
determining, by the first UE based on a second PSSCH and/or PSCCH and a third mapping rule, the first resource, where the third mapping rule is used to indicate a mapping relationship between the second PSSCH and/or PSCCH and the first resource;
determining, by the first UE based on a location of configuration information or indication information and a fourth mapping rule, the first resource, where the fourth mapping rule is used to indicate a mapping relationship between the location of the configuration information or indication information and the first resource; and
determining, by the first UE based on a channel parameter and a fifth mapping rule, the first resource, where the fifth mapping rule is used to indicate a mapping relationship between the channel parameter and the first resource.

In some optional embodiments, the first UE determines the first resource based on a first physical sidelink shared channel PSSCH and/or physical sidelink control channel PSCCH and a first mapping rule, where the first mapping rule is used to indicate a mapping relationship between the first PSSCH and/or PSCCH and the first resource; where
the first PSSCH and/or PSCCH is at least one of the following: a PSSCH and/or PSCCH transmitted by a second UE; a PSSCH and/or PSCCH scheduled by a scheduling UE; a PSSCH and/or PSCCH carrying scheduling information of the scheduling UE; and a PSSCH and/or PSCCH scheduled by a network-side device.

Optionally, the second UE is a transmit-side device of PSSCH or PSCCH, and a receive-side device of feedback information.

Optionally, there may be a plurality of second UEs.

Optionally, the scheduling UE may be a header UE (header UE) for controlling data transmission and reception of a pair of UEs.

Optionally, the scheduling UE may be a device that transmits the PSSCH and/or PSCCH, or it may be a device that controls a UE/header UE to transmit the PSSCH and/or PSCCH, or it may be a device that authorizes a UE to transmit the PSSCH and/or PSCCH.

Optionally, the first PSSCH and/or PSCCH is determined based on at least one of first-stage SCI, second-stage SCI, and a location of the transmitted data. In the current definition of SL, the first-stage SCI is carried on the PSCCH, and the second-stage SCI and data are carried on the PSSCH.

Optionally, the first mapping rule satisfies at least one of the following:
the first mapping rule is obtained through predefinition, pre-configuration, or configuration;
the first mapping rule is predefined, pre-configured, or configured within M physical sidelink feedback channel PSFCH periods, where M is a value predefined in a protocol, pre-configured, or configured;
the first PSSCH and/or PSCCH and the first resource are in a one-to-one, one-to-many, many-to-one, or many-to-many mapping relationship; and
a gap between an i-th first resource and a j-th first resource in the first mapping rule is greater than L, where i and j are positive integers greater than or equal to 1, and L is a value predefined, pre-configured, configured, or indicated.

Herein, "predefined" refers to predefined in a protocol, "pre-configured" refers to pre-configured by the network-side device, the second UE, or the scheduling UE through radio resource control (Radio Resource Control, RRC) signaling; and "configured" refers to configured by the network-side device, the second UE, or the scheduling UE through RRC signaling.

Optionally, if the PSFCH period is N (for example, the value is 1, 2, or 4), the first mapping rule is predefined, pre-configured, or configured within M periods, where the first mapping rule is a mapping rule of the PSFCH, M being a value predefined in a protocol, pre-configured, or configured.

For example, in a case of PSFCH period N = 4, if M = 3, RRC pre-configures resources of 3 candidate PSFCHs corresponding to the PSSCH.

Optionally, the first mapping rule is one or more in quantity, meaning that the first PSSCH and/or PSCCH and the first resource are in a one-to-one, one-to-many, many-to-one, or many-to-many mapping relationship.

Optionally, L is the maximum channel occupancy time MCOT, where a gap between an i-th first resource and a j-th first resource in the first mapping rule is greater than the maximum channel occupancy time MCOT, i, and j being positive integers greater than or equal to 1. For example, the gap between the first PSFCH candidate feedback resource and the last PSFCH candidate feedback resource is greater than the MCOT of the PSSCH. This ensures that the PSFCH candidate feedback resources will not all fail due to all of them being within one COT.

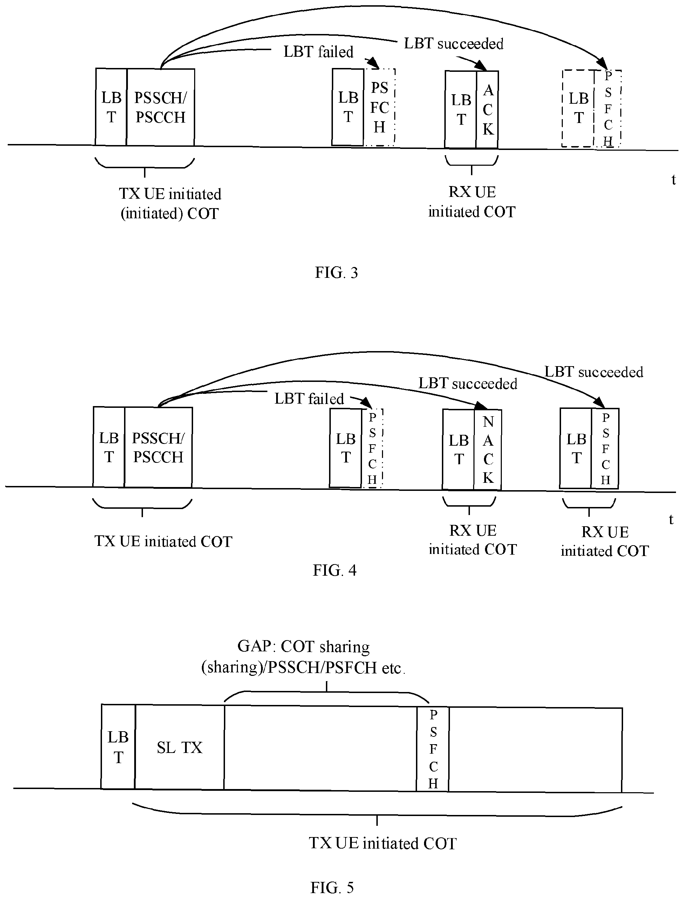

FIG. 3 is a first schematic diagram of semi-statically configuring one/more PSFCH candidate resources according to an embodiment of this application. FIG. 4 is a second schematic diagram of semi-statically configuring one/more PSFCH candidate resources according to an embodiment of this application.

The first UE performs a channel access procedure, and preempts a resource to transmit a PSFCH. A pre-configured candidate feedback resource has one/multiple fixed mapping relationship with the PSSCH and/or PSCCH. For M PSFCH periods, the PSFCH mapping rule is configured. One PSSCH and/or PSCCH may correspond to M candidate PSFCH resources.

Defining a plurality of candidate PSFCH resources can provide more access opportunities for the first UE.

Optionally, the mapping relationship between the first PSSCH and/or PSCCH and the first resource includes:
a first transmission gap Gap1 between the first resource and the first PSSCH and/or PSCCH, indicated by downlink control information DCI or sidelink control information SCI; where
the first transmission gap Gap1 is a predefined, pre-configured, configured, or indicated value.

It should be understood that the first resource is related to the first PSSCH and/or PSCCH.

DCI corresponds to a PSSCH and/or PSCCH scheduled by a network-side device; and SCI corresponds to a PSSCH and/or PSCCH scheduled by a UE-side device (the second UE or the scheduling UE).

Optionally, the SCI here may be a first-stage SCI or a second-stage SCI.

DCI or SCI indicates a first transmission gap Gap1 between the first resource and the first PSSCH and/or PSCCH. It should be understood that the first resource is at a location that is Gap1 away after the transmission of the first PSSCH and/or PSCCH.

Using DCI or SCI to indicate a first transmission gap Gap1 between the first resource and the first PSSCH and/or PSCCH is applicable to the case that the first UE shares the COT of the second UE.

Optionally, the DCI or SCI carries at least one of the following information:
information indicating that feedback information should be transmitted within a current channel occupancy time COT or next K COTs;
a UE identifier ID for feedback within the current COT; and
a UE ID for feedback within the next K COTs; where
K is a positive integer greater than or equal to 1.

FIG. 5 is a schematic diagram of a first UE sharing a COT of a second UE to transmit a PSFCH according to an embodiment of this application. As shown in FIG. 5, the TX UE initiated COT (that is, the resource preempted by the second UE by performing the channel access procedure) resource is shared with the first UE for transmitting the PSFCH.

Specifically, the second UE (TX UE in FIG. 5) transmits SCI to indicate to the first UE (RX UE in FIG. 4) the information of the COT (for example, the current COT/next COT) where the feedback information is located, including the following scenarios:
the SCI carries the UE ID of the first UE;
in SCI, a bits (a ≥ 0) are used to explicitly indicate the information of the COT where the PSFCH is located; and if a = 1, then when the value is "0", it means that the transmission is within the current COT; and when the value is "1", it means that the feedback information should be transmitted within the next COT; and
the SCI implicitly indicates to the first UE the information of the COT where the PSFCH is located.

In some other optional embodiments, the first UE determines the first resource based on data transmission of a network-side device and a second mapping rule, where the second mapping rule is used to indicate a mapping relationship between data transmission of the network-side device and the first resource.

It should be understood that the first resource is related to data transmission of the network-side device.

Optionally, the second mapping rule is obtained through predefinition, pre-configuration, or configuration.

Optionally, the mapping relationship between data transmission of the network-side device and the first resource includes:
a second transmission gap Gap2 between the first resource and physical uplink transmission information or physical downlink transmission information, indicated by DCI; where
the second transmission gap Gap2 is a value predefined, pre-configured, configured, or indicated.

That is, the second transmission gap Gap2 between the first resource and the PUSCH/PDSCH can be dynamically indicated to the first UE via DCI, but the value Gap2 may be determined by predefinition, pre-configuration, configuration, or indication. This embodiment is applicable to a case that the first UE shares a COT of a network-side device.

For example, for the case that the first UE shares the COT of the gNB, DCI is used to dynamically indicate that the first resource is located at the location that is Gap2_UL away after the UL transmission of the gNB; or DCI is used to dynamically indicate that the first resource is located at the location that is Gap2_DL away after the DL transmission of the gNB. Gap2_UL/Gap2_DL is a predefined, pre-configured, configured, or indicated value.

In some other optional embodiments, the first UE determines the first resource based on a second PSSCH and/or PSCCH and a third mapping rule, where the third mapping rule is used to indicate a mapping relationship between the second PSSCH and/or PSCCH and the first resource.

The second PSSCH and/or PSCCH is used to carry to-be-transmitted data of the first UE. That is, the second PSSCH and/or PSCCH is a second PSSCH and/or PSCCH to be transmitted by the first UE.

It should be understood that the first resource is transmitted in the same time-domain unit as the second PSSCH and/or PSCCH. The time-domain unit may be symbol, slot, or millisecond.

Optionally, the third mapping rule is obtained through predefinition, pre-configuration, or configuration.

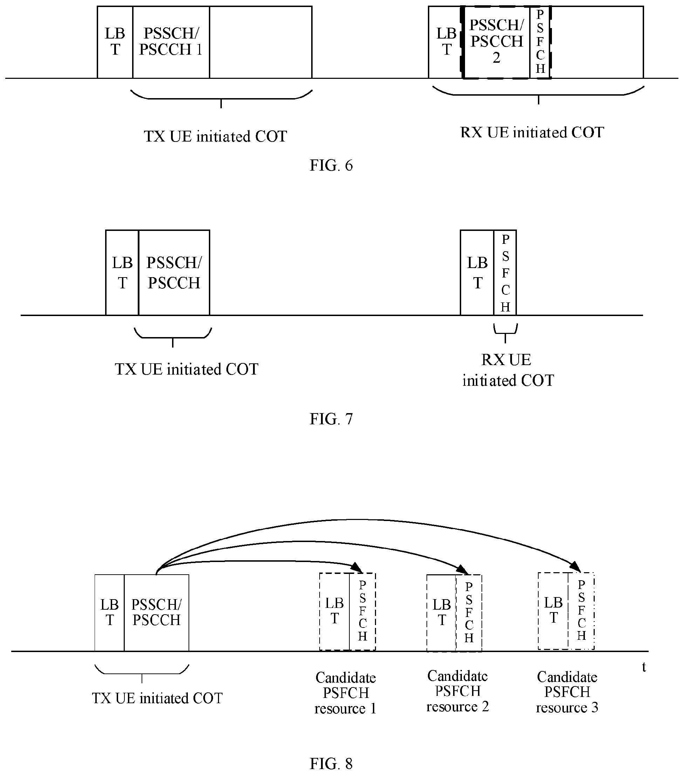

For example, FIG. 6 is a schematic diagram of a PSFCH of a first UE being sent in a same time-domain unit as a PSSCH and/or PSCCH of the first UE according to an embodiment of this application. As shown in FIG. 6, LBT is performed for the PSFCH of the first UE (that is, the RX UE corresponding to PSSCH and/or PSSCH 1) and the to-be-transmitted PSSCH and/or PSCCH 2 of the first UE. In a case that access of the first UE is successful, the PSFCH is sent in the same time-domain unit as PSSCH and/or PSCCH 2.

In some other optional embodiments, the first UE determines the first resource based on a location of configuration information or indication information and a fourth mapping rule, where the fourth mapping rule is used to indicate a mapping relationship between the location of the configuration information or indication information and the first resource.

That is, the first resource is related to the location of the configuration information or indication information, meaning that the first resource is implicitly indicated by the configuration information or indication information.

For example, the first UE determines the first resource based on a location of the DCI or SCI and a fourth mapping rule, where the fourth mapping rule is used to indicate a mapping relationship between the location of the DCI or SCI and the first resource.

Optionally, the fourth mapping rule is obtained through predefinition, pre-configuration, or configuration.

In some other optional embodiments, the first UE determines the first resource based on a channel parameter and a fifth mapping rule, where the fifth mapping rule is used to indicate a mapping relationship between the channel parameter and the first resource.

It should be understood that the first resource is related to the channel parameter.

Optionally, the channel parameter includes at least one of the following:
channel occupancy ratio (Channel Occupancy Ratio, CR);
channel busy ratio (Channel Busy Ratio, CBR);
reference signal received power (Reference Signal Receiving Power, RSRP) threshold;
received signal strength indicator (Received Signal Strength Indicator, RSSI) threshold;
signal to interference plus noise ratio (Signal to Interference plus Noise Ratio, SINR) threshold;
modulation and coding scheme (Modulation and Coding Scheme, MCS) table; and
PSSCH channel occupancy time.

Optionally, the fifth mapping rule is obtained through predefinition, pre-configuration, or configuration.

For example, the network pre-configured CR range (range)/CBR range has the following relationship with the feedback resource gap:
CBR range 1 corresponds to (candidate) feedback resource gap N1;
CBR range 2 corresponds to (candidate) feedback resource gap N2;

In a case that the CBR value within the system/resource pool measured by the UE falls within CBR range 1, the UE/gNB sets/indicates the gap of the feedback resource based on feedback resource gap N1.

It should be noted that the various ways of determining the first resource by the first UE described above may be used in combination.

In some optional embodiments, the first resource is some or all of time domain resources configured in an unlicensed band, or the first resource is all or some of resources within a resource pool or a channel occupancy time COT.

FIG. 7 is a schematic diagram of all time domain resources being PSFCH candidate resources according to an embodiment of this application. As shown in FIG. 7, the first UE performs channel access, and preempts a resource to transmit a PSFCH. The predefined first resource is some or all of the time domain resources configured on the unlicensed band. For the first resource, a channel access procedure is performed on the some or all of time domain resources. If the access is successful, the corresponding feedback resource may be occupied for transmitting feedback information. Optionally, the gap between the first resource and the corresponding PSSCH and/or PSCCH resource is greater than a third transmission gap. The third transmission gap is a predefined/pre-configured value.

Optionally, all resources within the resource pool/COT may be used as the first resource. Further, the first resource may be some of the resources within the resource pool/COT.

In the above scenarios, the first resource itself is not affected. To reduce the overheads of identifying the PSFCH by the feedback information receive-side device, an additional design is required for the information delivered by the PSFCH. The feedback information includes at least one of the following information:
ID of the feedback information receive-side device (for example, UE ID of the second UE);
ID of the feedback information transmit-side device (that is, UE ID of the first UE);
HARQ process ID; and
ACK/NACK.

The feedback information receive-side device is the second UE, the scheduling UE, or the network-side device.

It should be understood that in a case that one PSSCH corresponds to a plurality of PSFCH periods, feedback information from a plurality of transport blocks (Transport Block, TB) of a UE may be carried at one PSFCH occasion (occasion), and the feedback information receive-side device needs to identify which TB the feedback belongs to when receiving the feedback information.

In some optional embodiments, the first resource is pre-configured or configured through radio resource control RRC, and/or the first resource is indicated by a medium access control control element MAC CE, DCI, or SCI.

In an embodiment, the first resource is pre-configured or configured through radio resource control RRC. Optionally, the second UE pre-configures or configures the first resource of the first UE through RRC signaling, or the scheduling UE pre-configures or configures the first resource of the first UE through RRC signaling, or the network-side device pre-configures or configures the first resource of the first UE through RRC signaling.

In one embodiment, the first resource is indicated by a medium access control control element MAC CE, DCI, or SCI. Optionally, the second UE indicates the first resource of the first UE through a MAC CE or SCI, or the scheduling UE indicates the first resource of the first UE through a MAC CE or SCI, or the network-side device indicates the first resource of the first UE through a MAC CE or DCI.

In one embodiment, the first resource is pre-configured or configured through radio resource control RRC and indicated through a medium access control control element MAC CE, DCI or SCI.

For example, the first UE first receives a network pre-configured or configured table of configurations of the transmission gap between the first resource and the PSSCH or PSCCH, and then receives, from the network, MAC CE signaling indicating a specific value of the transmission gap.

FIG. 8 is a schematic diagram of dynamically indicating one/more PSFCH candidate resources according to an embodiment of this application.

In one embodiment, the second UE transmits SCI indicating the location of one/multiple PSFCH candidate resources. The first UE performs a channel access procedure before the candidate feedback resource. If the access is successful, the corresponding feedback resource may be occupied for transmitting feedback information. The second UE performs PSFCH monitoring on a candidate feedback resource (for example, candidate PSFCH resource 1, candidate PSFCH resource 2, and/or candidate PSFCH resource 3 in FIG. 8).

In one embodiment, the scheduling UE (for example, Header UE) transmits SCI indicating one/multiple PSFCH candidate locations to the first UE and/or the second UE. The first UE performs a channel access procedure before the candidate feedback resource. If the access is successful, the corresponding feedback resource may be occupied for transmitting feedback information. The second UE performs PSFCH monitoring on the candidate feedback resource.

In one embodiment, the network-side device (for example, gNB) transmits DCI indicating one/multiple PSFCH candidate locations to the first UE and/or the second UE. The first UE performs a channel access procedure before the candidate feedback resource. If the access is successful, the corresponding feedback resource may be occupied for transmitting feedback information. The second UE performs PSFCH monitoring on the candidate feedback resource.

In some other optional embodiments, in a case that the first resource is a monitoring resource/LBT location, the determining, by a first UE, a first resource includes:
determining the monitoring resource/LBT location based on the candidate feedback resource or feedback resource and a sixth mapping rule, where the sixth mapping rule is used to indicate a mapping relationship between the monitoring resource/LBT location and the candidate feedback resource/feedback resource.

Optionally, on the basis that the candidate feedback resource or feedback resource has been determined, the first UE determines the monitoring resource/LBT location according to the candidate feedback resource or feedback resource and the sixth mapping rule.

The sixth mapping rule includes at least one of the following:
a mapping relationship between the monitoring resource and the candidate feedback resource;
a mapping relationship between the monitoring resource and the feedback resource;
a mapping relationship between the LBT location and the candidate feedback resource; and
a mapping relationship between the LBT location and the feedback resource;

The above mapping relationships may be one-to-one, one-to-many, many-to-one, or many-to-many relationships.

The LBT location means an LBT start location and/or an LBT end location.

For example, the first UE determines a location of the candidate feedback resource based on a corresponding rule of a PSSCH and/or PSCCH predefined in a protocol. X time-domain units before the feedback resource, monitoring and resource preemption start, and if the preemption is successful, the feedback information is transmitted within the corresponding COT. This does not require continuous monitoring and reduces energy consumption for monitoring.

Optionally, the monitoring resource/LBT location is determined by offsetting Y time-domain units from at least one of the following:
a start location or an end location of the candidate feedback resource/feedback resource;
a slot start boundary or a slot end boundary; and
fixed frame period (Fixed Frame Period, FFP) start location; where
Y is a positive integer.

In this embodiment of this application, the time-domain unit may be microsecond, symbol, slot, subframe, frame, or millisecond.

In some other optional embodiments, the determining, by a first UE, a first resource includes:
determining, by the first UE based on a first preset rule, the first resource; where
the first preset rule includes:
   a modulus of an N value is calculated based on an SL resource pool index (index), and in a case that the obtained modulus is A, a resource corresponding to the SL resource pool index (index) is determined as the first resource; where
   the SL resource pool index (index) is a number of a system frame number (System Frame Number, SFN) or a number of a direct frame number (Direct Frame Number, DFN) in an SL resource pool; and
   a value of N and/or A satisfies at least one of the following:
      being a parameter predefined in a protocol, pre-configured, or configured, and/or a value indicated by a MAC CE, DCI, or SCI;
      being a value configured through a resource pool, CR, CBR, logical channel, logical channel group, priority, contention window (contention window, CW), or channel access priority class (Channel Access Priority, CAPC) parameter; and

A being a value configured for a UE, or a value related to a UE ID.

A being a value configured for a UE means that A is a parameter configured independently for the UE. That is, different values can be configured for different UEs.

For example, one or more values of N and/or A are configured for each resource pool.

For example, a mapping relationship between CR and N and/or A is set up, and based on a measured CR, a corresponding value of N and/or A is obtained; or a mapping relationship between CBR and N and/or A is set up, and based on a measured CBR, a corresponding value of N and/or A is obtained.

Optionally, based on a resource pool, CR, CBR, logical channel, logical channel group, priority, CW, or CAPC parameter, an adjusted value delta of N and/or A is set, that is, N/A is updated.

Optionally, the determining, by a first UE, a first resource includes:
determining, by the first UE based on a second preset rule, the first resource; where
the second preset rule includes:
   a resource obtained by offsetting m time-domain units from a start time domain resource of a channel occupancy time COT as a reference is determined as the first resource; where
   a value of m satisfies at least one of the following:
      m is a parameter predefined in a protocol, pre-configured, or configured, and/or a value indicated by a MAC CE/DCI/SCI; and
      a remainder on dividing m by M is equal to B (that is, m mod M = B), where a value of M and/or B satisfies at least one of the following: being a parameter predefined in a protocol, pre-configured, or configured, and/or a value indicated by a MAC CE, DCI, or SCI; being a value configured through a resource pool, CR, CBR, logical channel, logical channel group, priority, contention window CW, or channel access priority class CAPC parameter; and B being a value configured for a UE, or a value related to a UE ID.

B being a value configured for a UE means that B is a parameter configured independently for the UE. That is, different values can be configured for different UEs, where
m is one or more locations.

For example, M is predefined as 4. If it is predefined that m(mod M) = 0, it is a candidate start location. Within the COT range, locations with an offset of 4, 8, 12, ... from the COT start location are candidate feedback resource locations.

Optionally, the method further includes:
performing, by the first UE, the channel access procedure at a location of the first resource;
in a case of successful access, occupying, by the first UE, the first resource to transmit feedback information; and
in a case of failed access, performing, by the first UE, the channel access procedure at a location of next first resource or locations of next multiple first resources.

Optionally, the feedback information further includes at least one of the following:
an identifier ID of a feedback information receive-side device;
an ID of the first UE;
a hybrid automatic repeat request process ID HARQ process ID;
an acknowledgment (ACKnowledgment, ACK)/negative-acknowledgment (Non-ACKnowledgment, NACK); and
discontinuous transmission (Discontinuous Transmission, DTX), where DTX means that the UE/base station for receiving the feedback information does not receive any feedback information at a location where it expects to receive the feedback information, and the feedback is considered to be DTX.

Optionally, the method further includes at least one of the following:
in a case that the feedback information is NACK, performing, by the first UE, the channel access procedure at a location of next first resource or locations of next multiple first resources;
in a case that the feedback information is ACK, stopping, by the first UE, performing the channel access procedure at a location of a subsequent first resource; and
determining, by the first UE based on an indication from a second UE, a scheduling UE, or a network-side device, whether to perform the channel access procedure at the location of a subsequent first resource.

It should be understood that the first UE performs the channel access procedure, that is, channel monitoring, on part/all of the first resources, and performs at least one of the following according to the monitoring result:
1) in a case that access of the first UE is successful on the first resource, transmitting feedback information on the corresponding feedback resource, with at least one of the following satisfied:
   in a case that the feedback information is NACK, performing, by the first UE, channel access at the next one/multiple first resources;
   in a case that the feedback information is ACK, stopping, by the first UE, performing channel access at a subsequent first resource; and
   determining, by the first UE based on an indication from a second UE, a scheduling UE, or a network-side device, whether to perform channel access on the subsequent first resource; and
2) in a case that access of the first UE fails on the first resource, performing channel access on the next one/multiple first resources.

The part/all of the first resources are semi-statically configured and/or dynamically indicated first resources.

Referring to FIG. 3, the first UE performs a channel access procedure before the candidate feedback resource. If the access is successful, the corresponding feedback resource may be occupied for transmitting feedback information. In a case that the feedback information is ACK, the RX UE does not perform LBT detection before the subsequent candidate feedback resource; and in a case that the feedback is NACK, the RX UE performs LBT detection on the subsequent candidate feedback resource.

Referring to FIG. 7, the first UE performs a channel access procedure on all time domain resources. If the access is successful, the corresponding feedback resource may be occupied for transmitting feedback information, where the feedback information includes at least one of a feedback information receive-side device ID, a first UE ID, a HARQ process ID, and ACK/NACK information.

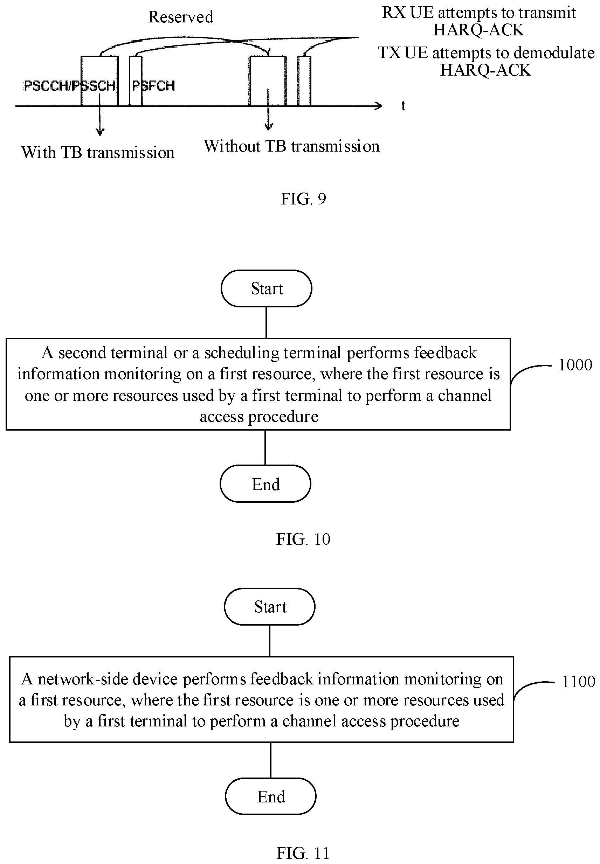

FIG. 9 is a schematic diagram of a PSFCH resource being associated with a PSCCH/PSSCH according to an embodiment of this application. Referring to FIG. 9, optionally, the PSCCHs/PSSCHs for TB initial transmission/retransmission are associated with the corresponding PSFCHs, respectively. The first UE (RX UE in FIG. 9) needs to provide feedback of HARQ-ACK on the associated PSFCH after demodulation of the PSCCH/PSSCH. For an unlicensed band, the first UE may not be able to access a channel to provide PSFCH feedback. The first UE may attempt channel access against multiple PSFCH resources, and the first UE may at least attempt channel access on the PSFCH resource corresponding to the PSCCHs/PSSCHs (part of the PSCCHs/PSSCHs) associated with/reserved by the demodulated PSCCH/PSSCH (regardless of whether or not there is TB transmission on the reserved PSCCH/PSSCH). If the access is successful, HARQ-ACK information feedback is provided. Optionally, the resource reserved is a resource reserved for the TB transmission.

After the second UE (TX UE in FIG. 9) performs TB transmission, if no HARQ-ACK message is demodulated on the PSFCH associated with the PSCCH/PSSCH, the second UE still needs to perform PSFCH reception at the location where the first UE may have transmitted the PSFCH.

In this embodiment of this application, the first UE determines, based on protocol predefinition, a semi-static configuration, a dynamic indication, or a preset rule, a first resource for performing the channel access procedure. After a successful access, feedback information is transmitted on the corresponding feedback resource. The monitoring location is flexible and controllable, and the scheduling flexibility is high. Moreover, the first UE only needs to perform channel access on the first resource, which can reduce the energy consumption for the monitoring of the first UE.

FIG. 10 is a second schematic flowchart of a method for determining a sidelink feedback resource according to an embodiment of this application. As shown in FIG. 10, the method includes:

Step 1000: A second UE or scheduling UE performs feedback information monitoring on a first resource, where the first resource is one or more resources used by a first UE to perform a channel access procedure.

It should be noted that this embodiment of this application may be performed by the second UE, or the scheduling UE. That is, the second UE or the scheduling UE acts as a feedback information receiving end.

The second UE or the scheduling UE may indicate the first UE the way in which to determine the first resource. Thus, the first resource of the first UE is known to the second UE or the scheduling UE. Alternatively, the second UE or the scheduling UE may determine the first resource of the first UE according to a preset rule. Refer to the description in the foregoing method embodiments for the preset rule and details are not described herein again.

Optionally, the second UE is a transmit-side device of PSSCH or PSCCH, and a receive-side device of feedback information.

Optionally, the scheduling UE may be a header UE (header UE) for controlling data transmission and reception of a pair of UEs.

Optionally, the scheduling UE may be a device that transmits the PSSCH and/or PSCCH, or it may be a device that controls a UE/header UE to transmit the PSSCH and/or PSCCH, or it may be a device that authorizes a UE to transmit the PSSCH and/or PSCCH.

It should be understood that the first UE performs a channel access procedure on the first resource, and if the access is successful, the first UE transmits feedback information on the corresponding first resource. Accordingly, the second UE or the scheduling UE performs feedback information monitoring on the first resource.

In this embodiment of this application, the second UE or the scheduling UE performs feedback information monitoring on the first resource. This can reduce the energy consumption of the second UE or the scheduling UE for receiving the feedback information.

Optionally, the method further includes at least one of the following:
indicating, by the second UE or the scheduling UE based on at least one of radio resource control RRC signaling, a MAC CE, and SCI, the first resource of the first UE;
indicating, by the second UE or the scheduling UE based on at least one of radio resource control RRC signaling, a MAC CE, and SCI, a first mapping rule of the first UE;
indicating, by the second UE or the scheduling UE based on at least one of radio resource control RRC signaling, a MAC CE, and SCI, a third mapping rule of the first UE;
indicating, by the second UE or the scheduling UE based on a MAC CE or SCI, a fourth mapping rule of the first UE; and
indicating, by the second UE or the scheduling UE based on at least one of radio resource control RRC signaling, a MAC CE, and SCI, a fifth mapping rule of the first UE.

It should be understood that the method further includes at least one of the following:
pre-configuring or configuring, by the second UE or the scheduling UE based on radio resource control RRC signaling, a first resource of the first UE;
indicating, by the second UE or the scheduling UE based on a medium access control control element MAC CE or sidelink control information SCI, a first resource of the first UE;
indicating, by the second UE or the scheduling UE based on RRC signaling and a MAC CE or SCI, a first resource of the first UE;
pre-configuring or configuring, by the second UE or the scheduling UE based on RRC signaling, a first mapping rule of the first UE;
indicating, by the second UE or the scheduling UE based on a MAC CE or SCI, a first mapping rule of the first UE;
indicating, by the second UE or the scheduling UE based on RRC signaling and a MAC CE or SCI, a first mapping rule of the first UE;
pre-configuring or configuring, by the second UE or the scheduling UE based on RRC signaling, a third mapping rule of the first UE;
indicating, by the second UE or the scheduling UE based on a MAC CE or SCI, a third mapping rule of the first UE;
indicating, by the second UE or the scheduling UE based on RRC signaling and a MAC CE or SCI, a third mapping rule of the first UE;
indicating, by the second UE or the scheduling UE based on a MAC CE or SCI, a fourth mapping rule of the first UE; and
pre-configuring or configuring, by the second UE or the scheduling UE based on RRC signaling, a fifth mapping rule of the first UE;
indicating, by the second UE or the scheduling UE based on a MAC CE or SCI, a fifth mapping rule of the first UE; and
indicating, by the second UE or the scheduling UE based on RRC signaling and a MAC CE or SCI, a fifth mapping rule of the first UE; where
the first mapping rule is used to indicate a mapping relationship between a first PSSCH and/or PSCCH and the first resource;
the third mapping rule is used to indicate a mapping relationship between a second PSSCH and/or PSCCH of the first UE and the first resource;
the fourth mapping rule is used to indicate a mapping relationship between a location of configuration information or indication information and the first resource; and
the fifth mapping rule is used to indicate a mapping relationship between a channel parameter and the first resource; where
the first PSSCH and/or PSCCH is at least one of the following: a PSSCH and/or PSCCH transmitted by the second UE; a PSSCH and/or PSCCH scheduled by the scheduling UE; and a PSSCH and/or PSCCH carrying scheduling information of the scheduling UE; and
the second PSSCH and/or PSCCH is used to carry to-be-transmitted data of the first UE.

Optionally, the method further includes at least one of the following:
in a case that no feedback information is received on the first resource, determining that the feedback information is negative-acknowledgment NACK/discontinuous transmission DTX;
in a case that feedback information received on the first resource is NACK, performing, by the second UE or the scheduling UE, feedback information monitoring at a location of next first resource or locations of next multiple first resources;
in a case that feedback information received on all first resources is acknowledgment ACK, indicating, by the second UE or the scheduling UE, the first resource to the first UE; and
in a case that no ACK is received on any first resource, discarding, by the second UE or the scheduling UE, a current data packet.

Referring to FIGs. 3 and 4, the second UE or scheduling UE performs PSFCH monitoring in a candidate feedback resource:
a) In a case that the monitoring fails, the feedback information is considered to be NACK or DTX.
b) In a case that NACK is detected, the feedback information monitoring is performed on a subsequent candidate feedback resource location (as shown in FIG. 3).
c) In a case that ACK is detected, the feedback information monitoring is not performed on a subsequent candidate feedback resource location (as shown in FIG. 4).

Optionally, the second UE or scheduling UE indicates a first resource to the first UE.
d) In a case that the M times of PSFCH all fail, or no ACK is detected, or NACK is detected for K times, the second UE discards the packet. Here, K is a preset threshold.

In this embodiment of this application, the second UE or the scheduling UE indicates the way in which a first resource of the first UE is determined, realizing the flexible configuration of the feedback resource and reducing the energy consumption of the first UE for monitoring the feedback resource. Additionally, the second UE or the scheduling UE needs only perform feedback information monitoring on the first resource. This can reduce the energy consumption of the second UE or the scheduling UE for monitoring the feedback information.

FIG. 11 is a third schematic flowchart of a method for determining a sidelink feedback resource according to an embodiment of this application. As shown in FIG. 11, the method includes:
Step 1100: A network-side device performs feedback information monitoring on a first resource, where the first resource is one or more resources used by a first UE to perform a channel access procedure.

This embodiment of this application is performed by a network-side device, that is, the network-side device acts as a feedback information receiving end.

It should be understood that the first UE performs a channel access procedure on the first resource, and if the access is successful, the first UE transmits feedback information on the corresponding first resource. Accordingly, the network-side device performs feedback information monitoring on the first resource.

The network-side device may indicate the first UE the way in which to determine the first resource. Thus, the first resource of the first UE is known to the network-side device. Alternatively, the network-side device may determine the first resource of the first UE according to a preset rule. Refer to the description in the foregoing method embodiments for the preset rule and details are not described herein again.

In this embodiment of this application, the network-side device performs feedback information monitoring on the first resource. This can reduce the energy consumption of the network-side device for receiving the feedback information.

Optionally, prior to the performing, by a network-side device, feedback information monitoring on a first resource, the method further includes at least one of the following:
indicating, by the network-side device based on at least one of radio resource control RRC signaling, a MAC CE, and DCI, the first resource of the first UE;
indicating, by the network-side device based on at least one of radio resource control RRC signaling, a MAC CE, and DCI, a first mapping rule of the first UE;
indicating, by the network-side device based on at least one of radio resource control RRC signaling, a MAC CE, and DCI, a second mapping rule of the first UE;
indicating, by the network-side device based on at least one of radio resource control RRC signaling, a MAC CE, and DCI, a third mapping rule of the first UE;
indicating, by the network-side device based on a MAC CE or DCI, a fourth mapping rule of the first UE; and
indicating, by the network-side device based on at least one of radio resource control RRC signaling, a MAC CE, and DCI, a fifth mapping rule of the first UE.

It should be understood that the method further includes at least one of the following:
pre-configuring or configuring, by the network-side device based on radio resource control RRC signaling, a first resource of the first UE;
indicating, by the network-side device based on a medium access control control element MAC CE or downlink control information DCI, a first resource of the first UE;
indicating, by the network-side device based on RRC signaling and a MAC CE or DCI, a first resource of the first UE;
pre-configuring or configuring, by the network-side device based on RRC signaling, a first mapping rule of the first UE;
indicating, by the network-side device based on a MAC CE or DCI, a first mapping rule of the first UE; and
indicating, by the network-side device based on RRC signaling and a MAC CE or DCI, a first mapping rule of the first UE;
pre-configuring or configuring, by the network-side device based on RRC signaling, a second mapping rule of the first UE;
indicating, by the network-side device based on a MAC CE or DCI, a second mapping rule of the first UE;
indicating, by the network-side device based on RRC signaling and a MAC CE or DCI, a second mapping rule of the first UE;
pre-configuring or configuring, by the network-side device based on RRC signaling, a third mapping rule of the first UE;
indicating, by the network-side device based on a MAC CE or DCI, a third mapping rule of the first UE;
indicating, by the network-side device based on RRC signaling and a MAC CE or DCI, a third mapping rule of the first UE;
indicating, by the network-side device based on a MAC CE or DCI, a fourth mapping rule of the first UE;
pre-configuring or configuring, by the network-side device based on RRC signaling, a fifth mapping rule of the first UE;
indicating, by the network-side device based on a MAC CE or DCI, a fifth mapping rule of the first UE; and
indicating, by the network-side device based on RRC signaling and a MAC CE or DCI, a fifth mapping rule of the first UE; where
the first mapping rule is used to indicate a mapping relationship between a first PSSCH and/or PSCCH and the first resource;
the second mapping rule is used to indicate a mapping relationship between data transmission of a network-side device and the first resource;
the third mapping rule is used to indicate a mapping relationship between a second PSSCH and/or PSCCH and the first resource;
the fourth mapping rule is used to indicate a mapping relationship between a location of configuration information or indication information and the first resource; and
the fifth mapping rule is used to indicate a mapping relationship between a channel parameter and the first resource; where
the first PSSCH and/or PSCCH is a PSSCH and/or PSCCH scheduled by the network-side device; and
the second PSSCH and/or PSCCH is used to carry to-be-transmitted data of the first UE.

Optionally, the method further includes at least one of the following:
in a case that no feedback information is received on the first resource, determining that the feedback information is negative-acknowledgment NACK/discontinuous transmission DTX;
in a case that feedback information received on the first resource is NACK, performing, by the network-side device, feedback information monitoring at a location of next first resource or locations of next multiple first resources;
in a case that feedback information received on all first resources is acknowledgment ACK, indicating, by the network-side device, the first resource to the first UE; and
in a case that no ACK is received on any first resource, discarding, by the network-side device, a current data packet.

In this embodiment of this application, the network-side device indicates the way in which a first resource of the first UE is determined, realizing the flexible configuration of the feedback resource and reducing the energy consumption of the first UE for monitoring the feedback resource. Additionally, the network-side device needs only perform feedback information monitoring on the first resource. This can reduce the energy consumption of the network-side device for monitoring the feedback information.

It should be noted that the method for determining a sidelink feedback resource provided in this embodiment of this application may be performed by an apparatus for determining a sidelink feedback resource, or be performed by a control module, for performing the method for determining a sidelink feedback resource, in the apparatus for determining a sidelink feedback resource. In this embodiment of this application, the method for determining a sidelink feedback resource being performed by an apparatus for determining a sidelink feedback resource is used as an example to describe the apparatus for determining a sidelink feedback resource provided in this embodiment of this application.

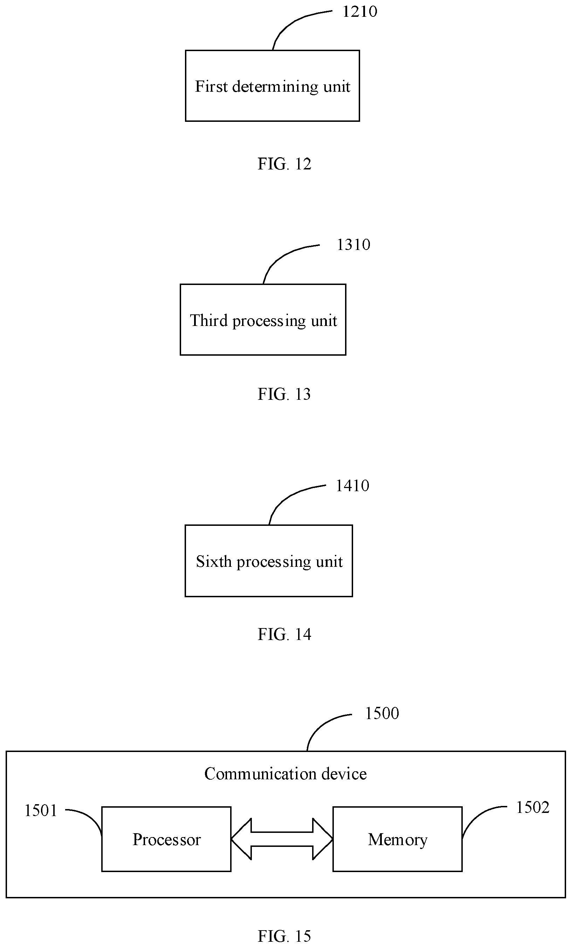

FIG. 12 is a first schematic structural diagram of an apparatus for determining a sidelink feedback resource according to an embodiment of this application, including:
a first determining unit 1210, configured to determine a first resource, where the first resource is one or more resources used by a first UE to perform a channel access procedure.

In this embodiment of this application, the first resource for performing the channel access procedure is determined. The monitoring location is flexible and controllable, and the scheduling flexibility is high. Moreover, channel access only needs to be performed on the first resource, which can reduce the consumption for energy detection.

Optionally, the first resource includes at least one of the following.
a candidate feedback resource;
a feedback resource;
a listen before talk LBT location;
a monitoring resource;
a physical sidelink feedback channel PSFCH resource;
a resource for a channel state information CSI report; and
a resource for a hybrid automatic repeat request HARQ.

Optionally, the first determining unit 1210 is configured to perform at least one of the following:
determining, based on a first physical sidelink shared channel PSSCH and/or physical sidelink control channel PSCCH and a first mapping rule, the first resource, where the first mapping rule is used to indicate a mapping relationship between the first PSSCH and/or PSCCH and the first resource;
determining, based on data transmission of a network-side device and a second mapping rule, the first resource, where the second mapping rule is used to indicate a mapping relationship between data transmission of the network-side device and the first resource;
determining, based on a second PSSCH and/or PSCCH and a third mapping rule, the first resource, where the third mapping rule is used to indicate a mapping relationship between a second PSSCH and/or PSCCH and the first resource;
determining, based on a location of configuration information or indication information and a fourth mapping rule, the first resource, where the fourth mapping rule is used to indicate a mapping relationship between the location of the configuration information or indication information and the first resource; and
determining, based on a channel parameter and a fifth mapping rule, the first resource, where the fifth mapping rule is used to indicate a mapping relationship between the channel parameter and the first resource; where
the first PSSCH and/or PSCCH is at least one of the following: a PSSCH and/or PSCCH transmitted by a second UE; a PSSCH and/or PSCCH scheduled by a scheduling UE; a PSSCH and/or PSCCH carrying scheduling information of the scheduling UE; and a PSSCH and/or PSCCH scheduled by a network-side device.
the second PSSCH and/or PSCCH is used to carry data to-be-transmitted data of the first UE.

Optionally, the first mapping rule satisfies at least one of the following:
the first mapping rule is obtained through predefinition, pre-configuration, or configuration;
the first mapping rule is predefined, pre-configured, or configured within M physical sidelink feedback channel PSFCH periods, where M is a value predefined in a protocol, pre-configured, or configured;
the first PSSCH and/or PSCCH and the first resource are in a one-to-one, one-to-many, many-to-one, or many-to-many mapping relationship; and
a gap between an i-th first resource and a j-th first resource in the first mapping rule is greater than L, where i and j are positive integers greater than or equal to 1, and L is a value predefined, pre-configured, configured, or indicated.

Optionally, the mapping relationship between the first PSSCH and/or PSCCH and the first resource includes:
a first transmission gap Gap1 between the first resource and the first PSSCH and/or PSCCH, indicated by downlink control information DCI or sidelink control information SCI; where
the first transmission gap Gap1 is a predefined, pre-configured, configured, or indicated value.

Optionally, the DCI or SCI carries at least one of the following information:
information indicating that feedback information should be transmitted within a current channel occupancy time COT or next K COTs;
a UE identifier ID for feedback within the current COT; and
a UE ID for feedback within the next K COTs; where
K is a positive integer greater than or equal to 1.

Optionally, the mapping relationship between data transmission of the network-side device and the first resource includes:
a second transmission gap Gap2 between the first resource and physical uplink transmission information or physical downlink transmission information, indicated by DCI; where
the second transmission gap Gap2 is a value predefined, pre-configured, configured, or indicated.

Optionally, the channel parameter includes at least one of the following:
channel occupancy ratio CR;
channel busy ratio CBR;
reference signal received power RSRP threshold;
received signal strength indicator RSSI threshold;
signal to interference plus noise ratio SINR threshold;
modulation and coding scheme table MCS table; and
PSSCH channel occupancy time.

Optionally, the first resource is some or all of time domain resources configured in an unlicensed band, or the first resource is all or some of resources within a resource pool or a channel occupancy time COT.

Optionally, the first resource is pre-configured or configured through a radio resource control RRC, and/or the first resource is indicated by a medium access control control element MAC CE, DCI, or SCI.

Optionally, in a case that the first resource is a monitoring resource/LBT location, the first determining unit is configured to:
determine the monitoring resource/LBT location based on the candidate feedback resource or feedback resource and a sixth mapping rule, where the sixth mapping rule is used to indicate a mapping relationship between the monitoring resource/LBT location and the candidate feedback resource/feedback resource.

Optionally, the monitoring resource/LBT location is determined by offsetting Y time-domain units from at least one of the following:
a start location or an end location of the candidate feedback resource/feedback resource;
a slot start boundary or a slot end boundary; and
a fixed frame period FFP start location; where
Y is a positive integer.

Optionally, the first determining unit is configured to:
determine the first resource based on a first preset rule; where
the first preset rule includes:
   a modulus of an N value is calculated based on an SL resource pool index (index), and in a case that the obtained modulus is A, a resource corresponding to the SL resource pool index (index) is determined as the first resource; where
   the SL resource pool index (index) is a number of a system frame number SFN or a number of a DFN in an SL resource pool; and
   a value of N and/or A satisfies at least one of the following:
      being a parameter predefined in a protocol, pre-configured, or configured, and/or a value indicated by a MAC CE, DCI, or SCI;
      being a value configured through a resource pool, CR, CBR, logical channel, logical channel group, priority, contention window CW, or channel access priority class CAPC parameter; and
      A being a value configured for a UE, or a value related to a UE ID.

Optionally, the first determining unit is configured to:
determine the first resource based on a second preset rule; where
the second preset rule includes:
   a resource obtained by offsetting m time-domain units from a start time domain resource of a channel occupancy time COT as a reference is determined as the first resource; where
   a value of m satisfies at least one of the following:
      m is a parameter predefined in a protocol, pre-configured, or configured, and/or a value indicated by a MAC CE/DCI/SCI; and
      a remainder on dividing m by M is equal to B (that is, m mod M = B), where a value of M and/or B satisfies at least one of the following: being a parameter predefined in a protocol, pre-configured, or configured, and/or a value indicated by a MAC CE, DCI, or SCI; being a value configured through a resource pool, CR, CBR, logical channel, logical channel group, priority, contention window CW, or channel access priority class CAPC parameter; and B being a value configured for a UE, or a value related to a UE ID.

Optionally, the apparatus further includes a first processing unit configured to:
perform the channel access procedure at a location of the first resource;
in a case of successful access, occupy the first resource to transmit feedback information; and
in a case of failed access, perform the channel access procedure at a location of next first resource or locations of next multiple first resources.

Optionally, the feedback information further includes at least one of the following:
an identifier ID of a feedback information receive-side device;
an ID of the first UE;
a hybrid automatic repeat request process ID HARQ process ID;
an acknowledgment ACK/negative-acknowledgment NACK; and
discontinuous transmission DTX.

Optionally, the apparatus further includes a second processing unit configured to perform at least one of the following:
in a case that the feedback information is NACK, performing the channel access procedure at a location of next first resource or locations of next multiple first resources;
in a case that the feedback information is ACK, stopping performing the channel access procedure at a location of a subsequent first resource; and
determining, based on an indication from a second UE, a scheduling UE, or a network-side device, whether to perform the channel access procedure at the location of a subsequent first resource.

In this embodiment of this application, based on protocol predefinition, a semi-static configuration, a dynamic indication, or a preset rule, a first resource for performing the channel access procedure is determined. After a successful access, feedback information is transmitted on the corresponding feedback resource. The monitoring location is flexible and controllable, and the scheduling flexibility is high. Moreover, the apparatus only needs to perform channel access on the first resource, which can reduce the consumption for energy detection.

The apparatus for determining a sidelink feedback resource in this embodiment of this application may be an apparatus, an apparatus or an electronic device having an operating system, or a component, an integrated circuit, or a chip in a UE. The apparatus or electronic device may be a mobile UE or a non-mobile UE. For example, the mobile UE may include but is not limited to the types of the UE 11 listed above, and the non-mobile UE may be a server, a network attached storage (Network Attached Storage, NAS), a personal computer (personal computer, PC), a television (television, TV), a teller machine, a self-service machine or the like, which are not specifically limited in the embodiments of this application.

The apparatus for determining a sidelink feedback resource provided in the embodiments of this application is capable of implementing various processes that are implemented in the method embodiments of FIG. 2 to FIG. 9, with the same technical effects achieved. To avoid repetition, details are not described herein again.

FIG. 13 is a second schematic structural diagram of an apparatus for determining a sidelink feedback resource according to an embodiment of this application. As shown in FIG. 13, the apparatus includes:
a third processing unit 1310, configured to perform feedback information monitoring on a first resource, where the first resource is one or more resources used by a first UE to perform a channel access procedure.

In this embodiment of this application, the apparatus for determining a sidelink feedback resource performs feedback information monitoring on the first resource. This can reduce the energy consumption of the apparatus for determining a sidelink feedback resource for receiving the feedback information.

Optionally, the apparatus further includes a fourth processing unit configured to perform at least one of the following:
indicating, based on at least one of radio resource control RRC signaling, a MAC CE, and SCI, the first resource of the first UE;
indicating, based on at least one of radio resource control RRC signaling, a MAC CE, and SCI, a first mapping rule of the first UE;
indicating, based on at least one of radio resource control RRC signaling, a MAC CE, and SCI, a third mapping rule of the first UE;
indicating, based on a MAC CE or SCI, a fourth mapping rule of the first UE; and
indicating, based on at least one of radio resource control RRC signaling, a MAC CE, and SCI, a fifth mapping rule of the first UE; where
the first mapping rule is used to indicate a mapping relationship between a first PSSCH and/or PSCCH and the first resource;
the third mapping rule is used to indicate a mapping relationship between a second PSSCH and/or PSCCH of the first UE and the first resource;
the fourth mapping rule is used to indicate a mapping relationship between a location of configuration information or indication information and the first resource; and
the fifth mapping rule is used to indicate a mapping relationship between a channel parameter and the first resource; where
the first PSSCH and/or PSCCH is at least one of the following: a PSSCH and/or PSCCH transmitted by the second UE; a PSSCH and/or PSCCH scheduled by the scheduling UE; and a PSSCH and/or PSCCH carrying scheduling information of the scheduling UE; and
the second PSSCH and/or PSCCH is used to carry to-be-transmitted data of the first UE.

Optionally, the apparatus further includes a fifth processing unit configured to perform at least one of the following:
in a case that no feedback information is received on the first resource, determining that the feedback information is negative-acknowledgment NACK/discontinuous transmission DTX;
in a case that feedback information received on the first resource is NACK, performing feedback information monitoring at a location of next first resource or locations of next multiple first resources;
in a case that feedback information received on all first resources is acknowledgment ACK, indicating the first resource to the first UE; and
in a case that no ACK is received on any first resource, discarding a current data packet.

In this embodiment of this application, the apparatus for determining a sidelink feedback resource indicates the way in which a first resource of the first UE is determined, realizing the flexible configuration of the feedback resource and reducing the energy consumption of the first UE for monitoring the feedback resource. Additionally, the apparatus for determining a sidelink feedback resource needs only perform feedback information monitoring on the first resource. This can reduce the energy consumption of the apparatus for determining a sidelink feedback resource for monitoring the feedback information.

The apparatus for determining a sidelink feedback resource in this embodiment of this application may be an apparatus, an apparatus or an electronic device having an operating system, or a component, an integrated circuit, or a chip in a UE. The apparatus or electronic device may be a mobile UE or a non-mobile UE. For example, the mobile UE may include but is not limited to the types of the UE 11 listed above, and the non-mobile UE may be a server, a network attached storage (Network Attached Storage, NAS), a personal computer (personal computer, PC), a television (television, TV), a teller machine, a self-service machine or the like, which are not specifically limited in the embodiments of this application.

The apparatus for determining a sidelink feedback resource provided in this embodiment of this application is capable of implementing various processes that are implemented in the method embodiment of FIG. 10, with the same technical effects achieved. To avoid repetition, details are not described herein again.

FIG. 14 is a third schematic structural diagram of an apparatus for determining a sidelink feedback resource according to an embodiment of this application. As shown in FIG. 14, the apparatus includes:
a sixth processing unit 1410, configured to perform feedback information monitoring on a first resource, where the first resource is one or more resources used by a first UE to perform a channel access procedure.

Optionally, the apparatus further includes a seventh processing unit configured to perform at least one of the following:
indicating, based on at least one of radio resource control RRC signaling, a MAC CE, and DCI, the first resource of the first UE;
indicating, based on at least one of radio resource control RRC signaling, a MAC CE, and DCI, a first mapping rule of the first UE;
indicating, based on at least one of radio resource control RRC signaling, a MAC CE, and DCI, a second mapping rule of the first UE;
indicating, based on at least one of radio resource control RRC signaling, a MAC CE, and DCI, a third mapping rule of the first UE;
indicating, based on a MAC CE or DCI, a fourth mapping rule of the first UE; and
indicating, based on at least one of radio resource control RRC signaling, a MAC CE, and DCI, a fifth mapping rule of the first UE; where
the first mapping rule is used to indicate a mapping relationship between a first PSSCH and/or PSCCH and the first resource;
the second mapping rule is used to indicate a mapping relationship between data transmission of a network-side device and the first resource;
the third mapping rule is used to indicate a mapping relationship between a second PSSCH and/or PSCCH and the first resource;
the fourth mapping rule is used to indicate a mapping relationship between a location of configuration information or indication information and the first resource; and
the fifth mapping rule is used to indicate a mapping relationship between a channel parameter and the first resource; where
the first PSSCH and/or PSCCH is a PSSCH and/or PSCCH scheduled by the network-side device; and
the second PSSCH and/or PSCCH is used to carry to-be-transmitted data of the first UE.

Optionally, the apparatus further includes an eighth processing unit configured to perform at least one of the following:
in a case that no feedback information is received on the first resource, determining that the feedback information is negative-acknowledgment NACK/discontinuous transmission DTX;
in a case that feedback information received on the first resource is NACK, performing feedback information monitoring at a location of next first resource or locations of next multiple first resources;
in a case that feedback information received on all first resources is acknowledgment ACK, indicating the first resource to the first UE; and
in a case that no ACK is received on any first resource, discarding a current data packet.

In this embodiment of this application, the apparatus for determining a sidelink feedback resource indicates the way in which a first resource of the first UE is determined, realizing the flexible configuration of the feedback resource and reducing the energy consumption of the first UE for monitoring the feedback resource. Additionally, the apparatus for determining a sidelink feedback resource needs only perform feedback information monitoring on the first resource. This can reduce the energy consumption of the apparatus for determining a sidelink feedback resource for monitoring the feedback information.

Optionally, as shown in FIG. 15, an embodiment of this application further provides a communication device 1500 including a processor 1501, a memory 1502, and a program or instructions stored in the memory 1502 and executable on the processor 1501. For example, in a case that the communication device 1500 is a UE, when the program or instructions are executed by the processor 1501, the processes of the foregoing embodiment of the method for determining a sidelink feedback resource are implemented, with the same technical effects achieved. In a case that the communication device 1500 is a network-side device, when the program or instructions are executed by the processor 1501, the processes of the foregoing embodiment of the method for determining a sidelink feedback resource are implemented, with the same beneficial effects achieved. To avoid repetition, details are not described herein again.

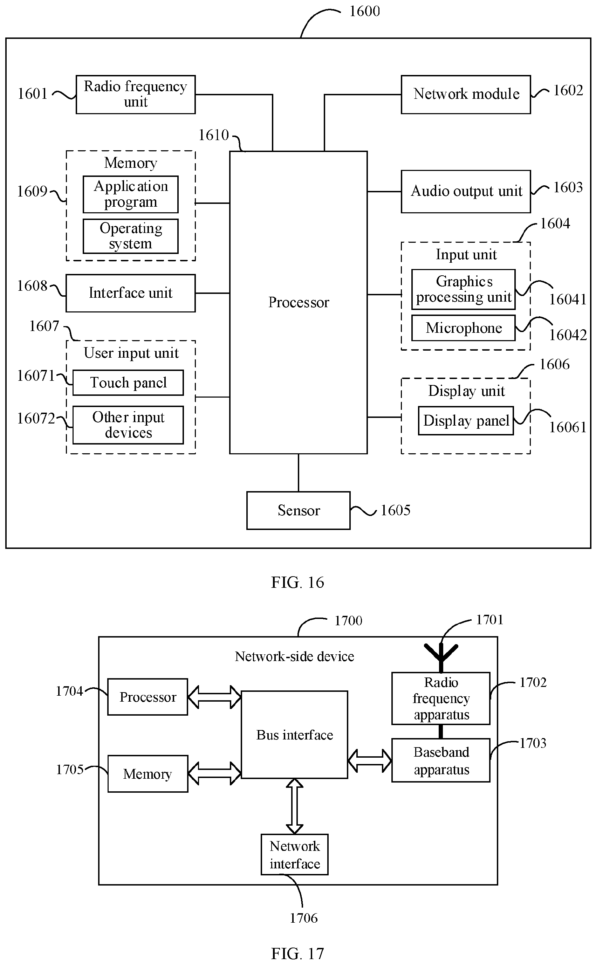

An embodiment of this application further provides a UE including a processor and a communication interface, where the processor is configured to determine a first resource and the first resource is one or more resources used by the first UE to perform a channel access procedure. Alternatively, the processor is configured to perform feedback information monitoring on a first resource, where the first resource is one or more resources used by a first UE to perform a channel access procedure. The UE embodiment is corresponding to the foregoing UE-side method embodiments, and each implementation process and realization method of the method embodiments described above are applicable to the UE embodiment, with the same technical effect achieved. Specifically, FIG. 16 is a schematic diagram of a hardware structure of a UE implementing an embodiment of this application; and
The UE 1600 includes but is not limited to at least some of the components such as a radio frequency unit 1601, a network module 1602, an audio output unit 1603, an input unit 1604, a sensor 1605, a display unit 1606, a user input unit 1607, an interface unit 1608, a memory 1609, and a processor 1610.

It can be understood by those skilled in the art that the UE 1600 may further include a power supply (for example, a battery) supplying power to the components. The power supply may be logically connected to the processor 1610 via a power management system, so that functions such as charge management, discharge management, and power consumption management are implemented by using the power management system. The structure of the UE shown in FIG. 16 does not constitute any limitation on the UE, and the UE may include more or fewer components than shown in the figure, or combine some of the components, or have different arrangements of the components. Details are not described herein.

It should be understood that in this embodiment of this application, the input unit 1604 may include a graphics processing unit (Graphics Processing Unit, GPU) 16041 and a microphone 16042. The graphics processing unit 16041 processes image data of a static picture or a video that is obtained by an image capture apparatus (for example, a camera) in a video capture mode or an image capture mode. The display unit 1606 may include a display panel 16061. The display panel 1061 may be configured in a form of a liquid crystal display, an organic light-emitting diode display, or the like. The user input unit 1607 includes a touch panel 16071 and other input devices 16072. The touch panel 16071 is also referred to as a touchscreen. The touch panel 16071 may include two parts: a touch monitoring apparatus and a touch controller. The other input devices 16072 may include but are not limited to a physical keyboard, a functional button (such as a volume control button or a power on/off button), a trackball, a mouse, and a joystick. Details are not described herein.

In this embodiment of this application, the radio frequency unit 1601 transmits downlink data received from a network-side device to the processor 1610 for processing, and in addition, transmits uplink data to the network-side device. Generally, the radio frequency unit 1601 includes but is not limited to an antenna, at least one amplifier, a transceiver, a coupler, a low noise amplifier, a duplexer, and the like.

The memory 1609 may be configured to store software programs or instructions and various data. The memory 1609 may include a program or instruction storage area and a data storage area. The program or instruction storage area may store an operating system, an application program or instruction required by at least one function (for example, a sound playback function or an image playback function), and the like. Further, the memory 1609 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other volatile solid-state storage device.

The processor 1610 may include one or more processing units. Optionally, an application processor and a modem processor may be integrated in the processor 1610. The application processor primarily processes an operating system, user interfaces, application programs or instructions, and the like. The modem processor primarily processes radio communication, for example, being a baseband processor. It can be understood that the modem processor may alternatively be not integrated in the processor 1610.

The processor 1610 is configured to determine a first resource, where the first resource is one or more resources used by a first UE to perform a channel access procedure.

In this embodiment of this application, the first UE determines a first resource for performing the channel access procedure. The monitoring location is flexible and controllable, and the scheduling flexibility is high. Moreover, the UE only needs to perform channel access on the first resource, which can reduce the energy consumption for the monitoring of the UE.

Optionally, the first resource includes at least one of the following.
a candidate feedback resource;
a feedback resource;
a listen before talk LBT location;
a monitoring resource;
a physical sidelink feedback channel PSFCH resource;
a resource for a channel state information CSI report; and
a resource for a hybrid automatic repeat request HARQ.

Optionally, the processor 1610 is further configured to perform at least one of the following:
determining, based on a first physical sidelink shared channel PSSCH and/or physical sidelink control channel PSCCH and a first mapping rule, the first resource, where the first mapping rule is used to indicate a mapping relationship between the first PSSCH and/or PSCCH and the first resource;
determining, based on data transmission of a network-side device and a second mapping rule, the first resource, where the second mapping rule is used to indicate a mapping relationship between data transmission of the network-side device and the first resource;
determining, based on a second PSSCH and/or PSCCH and a third mapping rule, the first resource, where the third mapping rule is used to indicate a mapping relationship between a second PSSCH and/or PSCCH and the first resource;
determining, based on a location of configuration information or indication information and a fourth mapping rule, the first resource, where the fourth mapping rule is used to indicate a mapping relationship between the location of the configuration information or indication information and the first resource; and
determining, based on a channel parameter and a fifth mapping rule, the first resource, where the fifth mapping rule is used to indicate a mapping relationship between the channel parameter and the first resource; where
the first PSSCH and/or PSCCH is at least one of the following: a PSSCH and/or PSCCH transmitted by a second UE; a PSSCH and/or PSCCH scheduled by a scheduling UE; a PSSCH and/or PSCCH carrying scheduling information of the scheduling UE; and a PSSCH and/or PSCCH scheduled by a network-side device.
the second PSSCH and/or PSCCH is used to carry to-be-transmitted data of the first UE.

Optionally, in a case that the first resource is a monitoring resource/LBT location, the processor 1610 is further configured to:
determining the monitoring resource/LBT location based on the candidate feedback resource or feedback resource and a sixth mapping rule, where the sixth mapping rule is used to indicate a mapping relationship between the monitoring resource/LBT location and the candidate feedback resource/feedback resource.

Optionally, the processor 1610 is further configured to:
determine the first resource based on a first preset rule; where
the first preset rule includes:
   a modulus of an N value is calculated based on an SL resource pool index (index), and in a case that the obtained modulus is A, a resource corresponding to the SL resource pool index (index) is determined as the first resource; where
   the SL resource pool index (index) is a number of a system frame number SFN or a number of a DFN in an SL resource pool; and
   a value of N and/or A satisfies at least one of the following:
      being a parameter predefined in a protocol, pre-configured, or configured, and/or a value indicated by a MAC CE, DCI, or SCI;
      being a value configured through a resource pool, CR, CBR, logical channel, logical channel group, priority, contention window CW, or channel access priority class CAPC parameter; and
      A being a value configured for a UE, or a value related to a UE ID.

Optionally, the processor 1610 is further configured to:
determine the first resource based on a second preset rule; where
the second preset rule includes:
   a resource obtained by offsetting m time-domain units from a start time domain resource of a channel occupancy time COT as a reference is determined as the first resource; where
   a value of m satisfies at least one of the following:
      m is a parameter predefined in a protocol, pre-configured, or configured, and/or a value indicated by a MAC CE/DCI/SCI; and
      a remainder on dividing m by M is equal to B (that is, m mod M = B), where a value of M and/or B satisfies at least one of the following: being a parameter predefined in a protocol, pre-configured, or configured, and/or a value indicated by a MAC CE, DCI, or SCI; being a value configured through a resource pool, CR, CBR, logical channel, logical channel group, priority, contention window CW, or channel access priority class CAPC parameter; and B being a value configured for a UE, or a value related to a UE ID.

Optionally, the processor 1610 is further configured to:
perform the channel access procedure at a location of the first resource;
in a case of successful access, occupy the first resource to transmit feedback information; and
in a case of failed access, perform the channel access procedure at a location of next first resource or locations of next multiple first resources.

Optionally, the processor 1610 is further configured to perform at least one of the following:
in a case that the feedback information is NACK, performing the channel access procedure at a location of next first resource or locations of next multiple first resources;
in a case that the feedback information is ACK, stopping performing the channel access procedure at a location of a subsequent first resource; and
determining, based on an indication from a second UE, a scheduling UE, or a network-side device, whether to perform the channel access procedure at the location of a subsequent first resource.

In this embodiment of this application, the UE determines, based on protocol predefinition, a semi-static configuration, a dynamic indication, or a preset rule, a first resource for performing the channel access procedure. After a successful access, feedback information is transmitted on the corresponding feedback resource. The monitoring location is flexible and controllable, and the scheduling flexibility is high. Moreover, the UE only needs to perform channel access on the first resource, which can reduce the energy consumption for the monitoring of the UE.

In some other optional embodiments, the processor 1610 is configured to:
perform feedback information monitoring on a first resource, where the first resource is one or more resources used by a first UE to perform a channel access procedure.

Optionally, the processor 1610 is further configured to perform at least one of the following:
indicating, based on at least one of radio resource control RRC signaling, a MAC CE, and SCI, the first resource of the first UE;
indicating, based on at least one of radio resource control RRC signaling, a MAC CE, and SCI, a first mapping rule of the first UE;
indicating, based on at least one of radio resource control RRC signaling, a MAC CE, and SCI, a third mapping rule of the first UE;
indicating, based on a MAC CE or SCI, a fourth mapping rule of the first UE; and
indicating, based on at least one of radio resource control RRC signaling, a MAC CE, and SCI, a fifth mapping rule of the first UE; where
the first mapping rule is used to indicate a mapping relationship between a first PSSCH and/or PSCCH and the first resource;
the third mapping rule is used to indicate a mapping relationship between a second PSSCH and/or PSCCH of the first UE and the first resource;
the fourth mapping rule is used to indicate a mapping relationship between a location of configuration information or indication information and the first resource; and
the fifth mapping rule is used to indicate a mapping relationship between a channel parameter and the first resource; where
the first PSSCH and/or PSCCH is at least one of the following: a PSSCH and/or PSCCH transmitted by the second UE; a PSSCH and/or PSCCH scheduled by the scheduling UE; and a PSSCH and/or PSCCH carrying scheduling information of the scheduling UE; and
the second PSSCH and/or PSCCH is used to carry to-be-transmitted data of the first UE.

Optionally, the processor 1610 is further configured to perform at least one of the following:
in a case that no feedback information is received on the first resource, determining that the feedback information is negative-acknowledgment NACK/discontinuous transmission DTX;
in a case that feedback information received on the first resource is NACK, performing feedback information monitoring at a location of next first resource or locations of next multiple first resources;
in a case that feedback information received on all first resources is acknowledgment ACK, indicating the first resource to the first UE; and
in a case that no ACK is received on any first resource, discarding a current data packet.

In this embodiment of this application, the way in which a first resource of the first UE is determined is indicated, realizing the flexible configuration of the feedback resource and reducing the energy consumption of the first UE for monitoring the feedback resource. Additionally, feedback information monitoring needs only to be performed on the first resource. This can reduce the energy consumption for monitoring the feedback information.

An embodiment of this application further provides a network-side device, including a processor and a communication interface, where the processor is configured to perform feedback information monitoring on a first resource, the first resource being one or more resources used by a first UE to perform a channel access procedure. The network-side device embodiment is corresponding to the foregoing network-side device method embodiments, and each implementation process and realization method of the method embodiments described above are applicable to the network-side device embodiment, with the same technical effect achieved.

Specifically, an embodiment of this application further provides a network-side device. As shown in FIG. 17, the network-side device 1700 includes an antenna 1701, a radio frequency apparatus 1702, and a baseband apparatus 1703. The antenna 1701 is connected to the radio frequency apparatus 1702. In an uplink direction, the radio frequency apparatus 1702 receives information by using the antenna 1701, and transmits the received information to the baseband apparatus 1703 for processing. In a downlink direction, the baseband apparatus 1703 processes to-be-transmitted information, and transmits the information to the radio frequency apparatus 1702; and the radio frequency apparatus 1702 processes the received information and then transmits the information out by using the antenna 1701.

The frequency band processing apparatus may be located in the baseband apparatus 1703. The method performed by the network-side device in the foregoing embodiments may be implemented in the baseband apparatus 1703, and the baseband apparatus 1703 includes a processor 1704 and a memory 1705.

The baseband apparatus 1703 may include, for example, at least one baseband processing unit, where multiple chips are disposed on the baseband processing unit. As shown in FIG. 17, one of the chips is, for example, the processor 1704, connected to the memory 1705, to invoke a program in the memory 1705 to perform the operation of the network device shown in the foregoing method embodiment.

The baseband apparatus 1703 may further include a network interface 1706 configured to exchange information with the radio frequency apparatus 1702, where the interface is, for example, a common public radio interface (common public radio interface, CPRI for short).

Specifically, the network-side device in this embodiment of the present invention further includes instructions or a program stored in the memory 1705 and executable on the processor 1704. The processor 1704 invokes the instructions or program in the memory 1705 to perform the method performed by the modules shown in FIG. 14, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing embodiments of the method for determining a sidelink feedback resource are implemented, with the same technical effects achieved. To avoid repetition, details are not described herein again.

The processor is a processor in the UE described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement each process of the foregoing embodiments of the method for determining a sidelink feedback resource, with the same technical effect achieved. To avoid repetition, details are not described herein again.

It should be understood that the chip mentioned in this embodiment of this application may also be referred to as a system-level chip, a system chip, a chip system, a system-on-chip, or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The software product is stored in a storage medium (such as a ROM/RAM, a magnetic disk, or an optical disc), and includes several instructions for instructing a UE (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A method for determining a sidelink feedback resource, comprising:
determining, by a first UE, a first resource, wherein the first resource is one or more resources used by the first UE to perform a channel access procedure.

2. The method for determining a sidelink feedback resource according to claim 1, wherein the first resource comprises at least one of following:
a candidate feedback resource;
a feedback resource;
a listen before talk LBT location;
a monitoring resource;
a physical sidelink feedback channel PSFCH resource;
a resource for a channel state information CSI report; and
a resource for a hybrid automatic repeat request HARQ.

3. The method for determining a sidelink feedback resource according to claim 1 or 2, wherein the determining, by a first UE, a first resource comprises at least one of following:
determining, by the first UE based on a first physical sidelink shared channel PSSCH and/or physical sidelink control channel PSCCH and a first mapping rule, the first resource, wherein the first mapping rule is used to indicate a mapping relationship between the first PSSCH and/or PSCCH and the first resource;
determining, by the first UE based on data transmission of a network-side device and a second mapping rule, the first resource, wherein the second mapping rule is used to indicate a mapping relationship between data transmission of the network-side device and the first resource;
determining, by the first UE based on a second PSSCH and/or PSCCH and a third mapping rule, the first resource, wherein the third mapping rule is used to indicate a mapping relationship between the second PSSCH and/or PSCCH and the first resource;
determining, by the first UE based on a location of configuration information or indication information and a fourth mapping rule, the first resource, wherein the fourth mapping rule is used to indicate a mapping relationship between the location of the configuration information or indication information and the first resource; and
determining, by the first UE based on a channel parameter and a fifth mapping rule, the first resource, wherein the fifth mapping rule is used to indicate a mapping relationship between the channel parameter and the first resource; wherein
the first PSSCH and/or PSCCH is at least one of following: a PSSCH and/or PSCCH transmitted by a second UE; a PSSCH and/or PSCCH scheduled by a scheduling UE; a PSSCH and/or PSCCH carrying scheduling information of the scheduling UE; and a PSSCH and/or PSCCH scheduled by the network-side device; and
the second PSSCH and/or PSCCH is used to carry to-be-transmitted data of the first UE.

4. The method for determining a sidelink feedback resource according to claim 3, wherein the first mapping rule satisfies at least one of following:
the first mapping rule is obtained through predefinition, pre-configuration, or configuration;
the first mapping rule is predefined, pre-configured, or configured within M physical sidelink feedback channel PSFCH periods, wherein M is a value predefined in a protocol, pre-configured, or configured;
the first PSSCH and/or PSCCH and the first resource are in a one-to-one, one-to-many, many-to-one, or many-to-many mapping relationship; and
a gap between an i-th first resource and a j-th first resource in the first mapping rule is greater than L, wherein i and j are positive integers greater than or equal to 1, and L is a value predefined, pre-configured, configured, or indicated.

5. The method for determining a sidelink feedback resource according to claim 3, wherein the mapping relationship between the first PSSCH and/or PSCCH and the first resource comprises:
a first transmission gap Gap1 between the first resource and the first PSSCH and/or PSCCH, indicated by downlink control information DCI or sidelink control information SCI; wherein
the first transmission gap Gap1 is a predefined, pre-configured, configured, or indicated value.

6. The method for determining a sidelink feedback resource according to claim 5, wherein the DCI or SCI carries at least one of following information:
information indicating that feedback information should be transmitted within a current channel occupancy time COT or next K COTs;
a UE identifier ID for feedback within the current COT; and
a UE ID for feedback within the next K COTs; wherein
K is a positive integer greater than or equal to 1.

7. The method for determining a sidelink feedback resource according to claim 3, wherein the mapping relationship between data transmission of the network-side device and the first resource comprises:
a second transmission gap Gap2 between the first resource and uplink or downlink transmission information, indicated by DCI; wherein
the second transmission gap Gap2 is a value predefined, pre-configured, configured, or indicated.

8. The method for determining a sidelink feedback resource according to claim 3, wherein the channel parameter comprises at least one of following:
channel occupancy ratio CR;
channel busy ratio CBR;
reference signal received power RSRP threshold;
received signal strength indicator RSSI threshold;
signal to interference plus noise ratio SINR threshold;
modulation and coding scheme table MCS table; and
PSSCH channel occupancy time.

9. The method for determining a sidelink feedback resource according to claim 1, wherein the first resource is some or all of time domain resources configured in an unlicensed band, or the first resource is all or some of resources within a resource pool or a channel occupancy time COT.

10. The method for determining a sidelink feedback resource according to claim 1, wherein the first resource is pre-configured or configured through radio resource control RRC, and/or the first resource is indicated by a medium access control control element MAC CE, DCI, or SCI.

11. The method for determining a sidelink feedback resource according to claim 2, wherein in a case that the first resource is a monitoring resource or a LBT location, the determining, by a first UE, a first resource comprises:
determining the monitoring resource or the LBT location based on the candidate feedback resource or the feedback resource and a sixth mapping rule, wherein the sixth mapping rule is used to indicate a mapping relationship between the monitoring resource or the LBT location and the candidate feedback resource or the feedback resource.

12. The method for determining a sidelink feedback resource according to claim 11, wherein the monitoring resource or the LBT location is determined by offsetting Y time-domain units from at least one of following:
a start location or an end location of the candidate feedback resource/feedback resource;
a slot start boundary or a slot end boundary; and
a fixed frame period FFP start location; wherein
Y is a positive integer.

13. The method for determining a sidelink feedback resource according to claim 1, wherein the determining, by a first UE, a first resource comprises:
determining, by the first UE based on a first preset rule, the first resource; wherein
the first preset rule comprises:
a modulus of an N value is calculated based on an SL resource pool index (index), and in a case that the obtained modulus is A, a resource corresponding to the SL resource pool index is determined as the first resource; wherein
the SL resource pool index is a number of a system frame number SFN or a number of a DFN in an SL resource pool; and
a value of N and/or A satisfies at least one of following:
being a parameter predefined in a protocol, pre-configured, or configured, and/or a value indicated by a MAC CE, DCI, or SCI;
being a value configured through a resource pool, a CR, a CBR, a logical channel, a logical channel group, a priority, a contention window CW, or channel access priority class CAPC parameter; and
A being a value configured for a UE, or a value related to a UE ID.

14. The method for determining a sidelink feedback resource according to claim 1, wherein the determining, by a first UE, a first resource comprises:
determining, by the first UE based on a second preset rule, the first resource; wherein
the second preset rule comprises:
a resource obtained by offsetting m time-domain units from a start time domain resource of a channel occupancy time COT as a reference is determined as the first resource; wherein
a value of m satisfies at least one of following:
m is a parameter predefined in a protocol, pre-configured, or configured, and/or a value indicated by a MAC CE, DCI, or SCI; and
a remainder on dividing m by M is equal to B, wherein a value of M and/or B satisfies at least one of following: being a parameter predefined in a protocol, pre-configured, or configured, and/or a value indicated by a MAC CE, DCI, or SCI; being a value configured through a resource pool, a CR, a CBR, a logical channel, a logical channel group, a priority, a contention window CW, or channel access priority class CAPC parameter; and B being a value configured for a UE, or a value related to a UE ID.

15. The method for determining a sidelink feedback resource according to claim 1, wherein the method further comprises:
performing, by the first UE, the channel access procedure at a location of the first resource;
in a case of successful access, occupying, by the first UE, the first resource to transmit feedback information; and
in a case of failed access, performing, by the first UE, the channel access procedure at a location of next first resource or locations of next multiple first resources.

16. The method for determining a sidelink feedback resource according to claim 15, wherein the feedback information comprises at least one of following:
an identifier ID of a receiving UE of the feedback information;
an ID of the first UE;
a hybrid automatic repeat request HARQ process ID;
an acknowledgment ACK or negative acknowledgment NACK; and
discontinuous transmission DTX.

17. The method for determining a sidelink feedback resource according to claim 15, wherein the method further comprises at least one of following:
in a case that the feedback information is NACK, performing, by the first UE, the channel access procedure at a location of next first resource or locations of next multiple first resources;
in a case that the feedback information is ACK, stopping, by the first UE, performing the channel access procedure at a location of a subsequent first resource; and
determining, by the first UE based on an indication from a second UE, a scheduling UE, or a network-side device, whether to perform the channel access procedure at the location of a subsequent first resource.

18. A method for determining a sidelink feedback resource, comprising:
performing, by a second UE or a scheduling UE, feedback information monitoring on a first resource, wherein the first resource is one or more resources used by a first UE to perform a channel access procedure.

19. The method for determining a sidelink feedback resource according to claim 18, further comprising at least one of following:
indicating, by the second UE or the scheduling UE based on at least one of radio resource control RRC signaling, a MAC CE, and SCI, the first resource of the first UE;
indicating, by the second UE or the scheduling UE based on at least one of radio resource control RRC signaling, a MAC CE, and SCI, a first mapping rule of the first UE;
indicating, by the second UE or the scheduling UE based on at least one of radio resource control RRC signaling, a MAC CE, and SCI, a third mapping rule of the first UE;
indicating, by the second UE or the scheduling UE based on a MAC CE or SCI, a fourth mapping rule of the first UE; and
indicating, by the second UE or the scheduling UE based on at least one of radio resource control RRC signaling, a MAC CE, and SCI, a fifth mapping rule of the first UE; wherein
the first mapping rule is used to indicate a mapping relationship between a first PSSCH and/or PSCCH and the first resource;
the third mapping rule is used to indicate a mapping relationship between a second PSSCH and/or PSCCH of the first UE and the first resource;
the fourth mapping rule is used to indicate a mapping relationship between a location of configuration information or indication information and the first resource; and
the fifth mapping rule is used to indicate a mapping relationship between a channel parameter and the first resource; wherein
the first PSSCH and/or PSCCH is at least one of following: a PSSCH and/or PSCCH transmitted by the second UE; a PSSCH and/or PSCCH scheduled by the scheduling UE; and a PSSCH and/or PSCCH carrying scheduling information of the scheduling UE; and
the second PSSCH and/or PSCCH is used to carry to-be-transmitted data of the first UE.

20. The method for determining a sidelink feedback resource according to claim 18 or 19, further comprising at least one of following:
in a case that no feedback information is received on the first resource, determining that the feedback information is negative-acknowledgment NACK or discontinuous transmission DTX;
in a case that feedback information received on the first resource is NACK, performing, by the second UE or the scheduling UE, feedback information monitoring at a location of next first resource or locations of next multiple first resources;
in a case that feedback information received on all first resources is acknowledgment ACK, indicating, by the second UE or the scheduling UE, the first resource to the first UE; and
in a case that no ACK is received on any first resource, discarding, by the second UE or the scheduling UE, a current data packet.

21. A method for determining a sidelink feedback resource, comprising:
performing, by a network-side device, feedback information monitoring on a first resource, wherein the first resource is one or more resources used by a first UE to perform a channel access procedure.

22. The method for determining a sidelink feedback resource according to claim 21, wherein before the performing, by a network-side device, feedback information monitoring on a first resource, the method further comprises at least one of following:
indicating, by the network-side device based on at least one of radio resource control RRC signaling, a MAC CE, and DCI, the first resource of the first UE;
indicating, by the network-side device based on at least one of radio resource control RRC signaling, a MAC CE, and DCI, a first mapping rule of the first UE;
indicating, by the network-side device based on at least one of radio resource control RRC signaling, a MAC CE, and DCI, a second mapping rule of the first UE;
indicating, by the network-side device based on at least one of radio resource control RRC signaling, a MAC CE, and DCI, a third mapping rule of the first UE;
indicating, by the network-side device based on a MAC CE or DCI, a fourth mapping rule of the first UE; and
indicating, by the network-side device based on at least one of radio resource control RRC signaling, a MAC CE, and DCI, a fifth mapping rule of the first UE; wherein
the first mapping rule is used to indicate a mapping relationship between a first PSSCH and/or PSCCH and the first resource;
the second mapping rule is used to indicate a mapping relationship between data transmission of a network-side device and the first resource;
the third mapping rule is used to indicate a mapping relationship between a second PSSCH and/or PSCCH and the first resource;
the fourth mapping rule is used to indicate a mapping relationship between a location of configuration information or indication information and the first resource; and
the fifth mapping rule is used to indicate a mapping relationship between a channel parameter and the first resource; wherein
the first PSSCH and/or PSCCH is a PSSCH and/or PSCCH scheduled by the network-side device; and
the second PSSCH and/or PSCCH is used to carry to-be-transmitted data of the first UE.

23. The method for determining a sidelink feedback resource according to claim 21 or 22, further comprising at least one of following:
in a case that no feedback information is received on the first resource, determining that the feedback information is negative-acknowledgment NACK or discontinuous transmission DTX;
in a case that feedback information received on the first resource is NACK, performing, by the network-side device, feedback information monitoring at a location of next first resource or locations of next multiple first resources;
in a case that feedback information received on all first resources is acknowledgment ACK, indicating, by the network-side device, the first resource to the first UE; and
in a case that no ACK is received on any first resource, discarding, by the network-side device, a current data packet.

24. An apparatus for determining a sidelink feedback resource, comprising:
a first determining unit, configured to determine a first resource, wherein the first resource is one or more resources used by a first UE to perform a channel access procedure.

25. The apparatus for determining a sidelink feedback resource according to claim 24, wherein the first resource comprises at least one of following:
a candidate feedback resource;
a feedback resource;
a listen before talk LBT location;
a monitoring resource;
a physical sidelink feedback channel PSFCH resource;
a resource for a channel state information CSI report; and
a resource for a hybrid automatic repeat request HARQ.

26. The apparatus for determining a sidelink feedback resource according to claim 24 or 25, wherein the first determining unit is configured to perform at least one of following:
determining, based on a first physical sidelink shared channel PSSCH and/or physical sidelink control channel PSCCH and a first mapping rule, the first resource, wherein the first mapping rule is used to indicate a mapping relationship between the first PSSCH and/or PSCCH and the first resource;
determining, based on data transmission of a network-side device and a second mapping rule, the first resource, wherein the second mapping rule is used to indicate a mapping relationship between data transmission of the network-side device and the first resource;
determining, based on a second PSSCH and/or PSCCH and a third mapping rule, the first resource, wherein the third mapping rule is used to indicate a mapping relationship between the second PSSCH and/or PSCCH and the first resource;
determining, based on a location of configuration information or indication information and a fourth mapping rule, the first resource, wherein the fourth mapping rule is used to indicate a mapping relationship between the location of the configuration information or indication information and the first resource; and
determining, based on a channel parameter and a fifth mapping rule, the first resource, wherein the fifth mapping rule is used to indicate a mapping relationship between the channel parameter and the first resource; wherein
the first PSSCH and/or PSCCH is at least one of following: a PSSCH and/or PSCCH transmitted by a second UE; a PSSCH and/or PSCCH scheduled by a scheduling UE; a PSSCH and/or PSCCH carrying scheduling information of the scheduling UE; and a PSSCH and/or PSCCH scheduled by a network-side device; and
the second PSSCH and/or PSCCH is used to carry to-be-transmitted data of the first UE.

27. The apparatus for determining a sidelink feedback resource according to claim 25, wherein in a case that the first resource is a monitoring resource/LBT location, the first determining unit is configured to:
determining the monitoring resource/LBT location based on the candidate feedback resource or feedback resource and a sixth mapping rule, wherein the sixth mapping rule is used to indicate a mapping relationship between the monitoring resource/LBT location and the candidate feedback resource/feedback resource.

28. The apparatus for determining a sidelink feedback resource according to claim 24, wherein the first determining unit is configured to:
determine the first resource based on a first preset rule; wherein
the first preset rule comprises:
a modulus of an N value is calculated based on an SL resource pool index (index), and in a case that the obtained modulus is A, a resource corresponding to the SL resource pool index (index) is determined as the first resource; wherein
the SL resource pool index (index) is a number of a system frame number SFN or a number of a DFN in an SL resource pool; and
a value of N and/or A satisfies at least one of following:
being a parameter predefined in a protocol, pre-configured, or configured, and/or a value indicated by a MAC CE, DCI, or SCI;
being a value configured through a resource pool, CR, CBR, logical channel, logical channel group, priority, contention window CW, or channel access priority class CAPC parameter; and
A being a value configured for a UE, or a value related to a UE ID.

29. The apparatus for determining a sidelink feedback resource according to claim 24, wherein the first determining unit is configured to:
determine the first resource based on a second preset rule; wherein
the second preset rule comprises:
a resource obtained by offsetting m time-domain units from a start time domain resource of a channel occupancy time COT as a reference is determined as the first resource; wherein
a value of m satisfies at least one of following:
m is a parameter predefined in a protocol, pre-configured, or configured, and/or a value indicated by a MAC CE/DCI/SCI; and
a remainder on dividing m by M is equal to B, wherein a value of M and/or B satisfies at least one of following: being a parameter predefined in a protocol, pre-configured, or configured, and/or a value indicated by a MAC CE, DCI, or SCI; being a value configured through a resource pool, CR, CBR, logical channel, logical channel group, priority, contention window CW, or channel access priority class CAPC parameter; and B being a value configured for a UE, or a value related to a UE ID.

30. The apparatus for determining a sidelink feedback resource according to claim 24, wherein the apparatus further comprises a first processing unit configured to:
perform the channel access procedure at a location of the first resource;
in a case of successful access, occupy the first resource to transmit feedback information; and
in a case of failed access, perform the channel access procedure at a location of next first resource or locations of next multiple first resources.

31. The apparatus for determining a sidelink feedback resource according to claim 30, wherein the apparatus further comprises a second processing unit configured to perform at least one of following:
in a case that the feedback information is NACK, performing the channel access procedure at a location of next first resource or locations of next multiple first resources;
in a case that the feedback information is ACK, stopping performing the channel access procedure at a location of a subsequent first resource; and
determining, based on an indication from a second UE, a scheduling UE, or a network-side device, whether to perform the channel access procedure at a location of a subsequent first resource.

32. A apparatus for determining a sidelink feedback resource, comprising:
a third processing unit, configured to perform feedback information monitoring on a first resource, wherein the first resource is one or more resources used by a first UE to perform a channel access procedure.

33. The apparatus for determining a sidelink feedback resource according to claim 32, further comprising a fourth processing unit configured to perform at least one of following:
indicating, based on at least one of radio resource control RRC signaling, a MAC CE, and SCI, the first resource of the first UE;
indicating, based on at least one of radio resource control RRC signaling, a MAC CE, and SCI, a first mapping rule of the first UE;
indicating, based on at least one of radio resource control RRC signaling, a MAC CE, and SCI, a third mapping rule of the first UE;
indicating, based on a MAC CE or SCI, a fourth mapping rule of the first UE; and
indicating, based on at least one of radio resource control RRC signaling, a MAC CE, and SCI, a fifth mapping rule of the first UE; wherein
the first mapping rule is used to indicate a mapping relationship between a first PSSCH and/or PSCCH and the first resource;
the third mapping rule is used to indicate a mapping relationship between a second PSSCH and/or PSCCH of the first UE and the first resource;
the fourth mapping rule is used to indicate a mapping relationship between a location of configuration information or indication information and the first resource; and
the fifth mapping rule is used to indicate a mapping relationship between a channel parameter and the first resource; wherein
the first PSSCH and/or PSCCH is at least one of following: a PSSCH and/or PSCCH transmitted by the second UE; a PSSCH and/or PSCCH scheduled by the scheduling UE; and a PSSCH and/or PSCCH carrying scheduling information of the scheduling UE; and
the second PSSCH and/or PSCCH is used to carry to-be-transmitted data of the first UE.

34. The apparatus for determining a sidelink feedback resource according to claim 32 or 33, further comprising a fifth processing unit configured to perform at least one of following:
in a case that no feedback information is received on the first resource, determining that the feedback information is negative-acknowledgment NACK/discontinuous transmission DTX;
in a case that feedback information received on the first resource is NACK, performing feedback information monitoring at a location of next first resource or locations of next multiple first resources;
in a case that feedback information received on all first resources is acknowledgment ACK, indicating the first resource to the first UE; and
in a case that no ACK is received on any first resource, discarding a current data packet.

35. A apparatus for determining a sidelink feedback resource, comprising:
a sixth processing unit, configured to perform feedback information monitoring on a first resource, wherein the first resource is one or more resources used by a first UE to perform a channel access procedure.

36. The apparatus for determining a sidelink feedback resource according to claim 25, further comprising a seventh processing unit configured to perform at least one of following:
indicating, based on at least one of radio resource control RRC signaling, a MAC CE, and DCI, the first resource of the first UE;
indicating, based on at least one of radio resource control RRC signaling, a MAC CE, and DCI, a first mapping rule of the first UE;
indicating, based on at least one of radio resource control RRC signaling, a MAC CE, and DCI, a second mapping rule of the first UE;
indicating, based on at least one of radio resource control RRC signaling, a MAC CE, and DCI, a third mapping rule of the first UE;
indicating, based on a MAC CE or DCI, a fourth mapping rule of the first UE; and
indicating, based on at least one of radio resource control RRC signaling, a MAC CE, and DCI, a fifth mapping rule of the first UE; wherein
the first mapping rule is used to indicate a mapping relationship between a first PSSCH and/or PSCCH and the first resource;
the second mapping rule is used to indicate a mapping relationship between data transmission of a network-side device and the first resource;
the third mapping rule is used to indicate a mapping relationship between a second PSSCH and/or PSCCH and the first resource;
the fourth mapping rule is used to indicate a mapping relationship between a location of configuration information or indication information and the first resource; and
the fifth mapping rule is used to indicate a mapping relationship between a channel parameter and the first resource; wherein
the first PSSCH and/or PSCCH is a PSSCH and/or PSCCH scheduled by the network-side device; and
the second PSSCH and/or PSCCH is used to carry to-be-transmitted data of the first UE.

37. The apparatus for determining a sidelink feedback resource according to claim 35 or 36, further comprising an eighth processing unit configured to perform at least one of following:
in a case that no feedback information is received on the first resource, determining that the feedback information is negative-acknowledgment NACK/discontinuous transmission DTX;
in a case that feedback information received on the first resource is NACK, performing feedback information monitoring at a location of next first resource or locations of next multiple first resources;
in a case that feedback information received on all first resources is acknowledgment ACK, indicating the first resource to the first UE; and
in a case that no ACK is received on any first resource, discarding a current data packet.

38. A UE, comprising a processor, a memory, and a program or instructions stored in the memory and executable on the processor, wherein when the program or instructions are executed by the processor, the steps of the method for determining a sidelink feedback resource according to any one of claims 1 to 17 are implemented, or the steps of the method for determining a sidelink feedback resource according to any one of claims 18 to 20 are implemented.

39. A network-side device, comprising a processor, a memory, and a program or instructions stored in the memory and executable on the processor, wherein when the program or instructions are executed by the processor, the steps of the method for determining a sidelink feedback resource according to any one of claims 21 to 23 are implemented.

40. A readable storage medium, wherein the readable storage medium stores a program or instructions, and when the program or instructions are executed by a processor, the steps of the method for determining a sidelink feedback resource according to any one of claims 1 to 17 are implemented, the steps of the method for determining a sidelink feedback resource according to any one of claims 18 to 20 are implemented, or the steps of the method for determining a sidelink feedback resource according to any one of claims 21 to 23 are implemented.

41. A chip, wherein the chip comprises a processor and a communication interface, the communication interface is coupled to the processor, and the processor is configured to run a program or instructions to implement the steps of the method for determining a sidelink feedback resource according to any one of claims 1 to 17, the steps of the method for determining a sidelink feedback resource according to any one of claims 18 to 20, or the steps of the method for determining a sidelink feedback resource according to any one of claims 21 to 23.

42. A computer program/program product, wherein the computer program/program product is stored in a storage medium, and the program/program product is executed by at least one processor to implement the steps of the method for determining a sidelink feedback resource according to any one of claims 1 to 17, the steps of the method for determining a sidelink feedback resource according to any one of claims 18 to 20, or the steps of the method for determining a sidelink feedback resource according to any one of claims 21 to 23.
